# FASCICULE DE BREVET EUROPEEN

(11) **EP 3 183 379 B1**
(45) Date de publication et mention de la délivrance du brevet: **08.07.2020**
(21) Numéro de dépôt: 15748056.7
(22) Date de dépôt: 11.08.2015
(51) Int. Cl.: C25B 1/00, C25B 1/10, C25B 1/08, C25B 9/04, C25B 9/20, C25B 15/00, H01M 8/0267, H01M 8/04014, H01M 8/0668, H01M 8/04089, H01M 8/124, H01M 8/02, H01M 8/04, F28D 9/00, F28F 3/04, F28F 3/08, F28F 9/02, F28D 21/00, H01M 8/04119

(54) **PROCÉDÉ D'ÉLECTROLYSE OU DE CO-ÉLECTROLYSE À HAUTE TEMPÉRATURE, PROCÉDÉ DE PRODUCTION D'ÉLECTRICITÉ PAR PILE À COMBUSTIBLE SOFC, INTERCONNECTEURS, RÉACTEURS ET PROCÉDÉS DE FONCTIONNEMENT ASSOCIÉS**
VERFAHREN FÜR HOCHTEMPERATURELEKTROLYSE ODER CO-ELEKTROLYSE, VERFAHREN ZUR ERZEUGUNG VON STROM MITTELS EINER SOFC-BRENNSTOFFZELLE UND ZUGEHÖRIGE VERBINDER, REAKTOREN UND BETRIEBSVERFAHREN
METHOD FOR HIGH-TEMPERATURE ELECTROLYSIS OR CO-ELECTROLYSIS, METHOD FOR PRODUCING ELECTRICITY BY MEANS OF AN SOFC FUEL CELL, AND ASSOCIATED INTERCONNECTORS, REACTORS AND OPERATING METHODS

(30) Priorité: 22.08.2014 FR 1457944
(43) Date de publication de la demande: 28.06.2017
(73) Titulaire: Commissariat à l'Énergie Atomique et aux Énergies Alternatives, 75015 Paris (FR)
(72) Inventeur: REYTIER, Magali, F-38250 Villard de Lans (FR); BARDI, Nicolas, F-38380 Mirabel-les-Echelles (FR); BERNARD, Charlotte, F-74130 Contamine sur Arve (FR); MOUGIN, Julie, 73110 La Rochette (FR); SZYNAL, Philippe, F-73800 Chignin (FR)
(74) Mandataire: Nony
(86) Numéro de dépôt international: PCT/EP2015/068503
(87) Numéro de publication internationale: WO 2016/026740

(56) Documents cités:
- FR-A1- 3 000 108
- US-A- 6 051 331
- US-A1- 2004 151 975
- US-A1- 2007 287 047

## Description

### Domaine technique

La présente invention concerne le domaine de l'électrolyse de l'eau ou du dioxyde de carbone CO2, à haute température (EHT, ou EVHT pour électrolyse de la vapeur d'eau à haute température, ou HTE acronyme anglais pour « *High Temperature Electrolysis* », ou encore HTSE acronyme anglais pour *« High Temperature Steam Electrolysis* ») et de la co-électrolyse de l'eau également à haute température avec le dioxyde de carbone CO2.

La présente invention concerne également le domaine des piles à combustibles à oxyde solide (SOFC, acronyme anglais pour Solid Oxid Fuel Cell).

L'invention a trait plus particulièrement à une nouvelle réalisation d'un interconnecteur électrique et fluidique au sein d'un réacteur d'électrolyse ou de co-électrolyse à haute température (EHT), ou d'une pile SOFC à empilement de cellules électrochimiques élémentaires, dans lequel un circuit de caloporteur distinct est intégré.

On précise ici que, les dispositifs d'interconnexion, électrique et fluidique, aussi appelés interconnecteurs ou encore plaques d'interconnexion, sont les dispositifs qui assurent la connexion en série d'un point de vue électrique de chaque cellule électrochimique dans l'empilement des réacteurs EHT ou piles SOFC et en parallèle d'un point de vue fluidique, combinant ainsi la production de chacune des cellules. Les interconnecteurs assurent ainsi les fonctions d'amenée et de collecte de courant et délimitent des compartiments de circulation (distribution et/ou la collecte) des gaz.

### Art antérieur

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur.

Pour mettre en œuvre l'électrolyse à haute température, il est connu d'utiliser un électrolyseur de type SOEC (acronyme anglais de « *Solid Oxyde Electrolyte Cell* »)*,* constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Une pile à combustible à oxydes solides (SOFC) est constituée du même type d'empilement de motifs élémentaires.

Les interconnecteurs ont pour fonction d'assurer à la fois le passage du courant électrique et la circulation des gaz au voisinage de chaque cellule (vapeur d'eau injectée, hydrogène et oxygène extraits dans un électrolyseur EHT ; air et combustible dont l'hydrogène injectés et eau extraite dans une pile SOFC) et de séparer les compartiments anodiques et cathodiques qui sont les compartiments de circulation des gaz du côté respectivement des anodes et des cathodes des cellules.

Pour réaliser l'électrolyse de la vapeur d'eau à haute température EHT, on injecte de la vapeur d'eau H2O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H2 et des ions oxygène. Le dihydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode). Un gaz drainant, tel que de l'air peut circuler au niveau de l'anode et ainsi collecter l'oxygène généré sous forme gazeuse à l'anode.

Pour assurer le fonctionnement d'une pile à combustible SOFC, on injecte de l'air (oxygène) dans le compartiment cathodique de la pile et de l'hydrogène dans le compartiment anodique. L'oxygène de l'air va se dissocier en ions O₂⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment H2.

Les conditions de fonctionnement d'un électrolyseur EHT étant très proches de celles d'une pile à combustible SOFC, les mêmes contraintes technologiques se retrouvent, à savoir principalement la tenue mécanique aux températures et cyclages thermiques d'un empilement de matériaux différents (céramiques et alliage métallique), le maintien de l'étanchéité entre les compartiments anodique et cathodique, la tenue au vieillissement des interconnecteurs métalliques et la minimisation des pertes ohmiques à diverses interfaces de l'empilement.

Une contrainte importante est de gérer au mieux les régimes de fonctionnement thermiques d'une pile à combustible (SOFC) au sein de laquelle la réaction globale est exothermique, ou d'un électrolyseur (EHT) où la réaction globale peut être soit exothermique, soit endothermique selon le potentiel de fonctionnement.

En particulier pour une réaction exothermique d'un électrolyseur EHT, il est nécessaire d'évacuer la chaleur produite afin d'assurer un régime stationnaire de l'électrolyseur. L'évacuation de la chaleur se fait alors soit par les gaz sortant de l'électrolyseur, soit par rayonnement sur les bords.

Dans certains électrolyseurs déjà éprouvés, cette chaleur évacuée sert à réchauffer les gaz entrant par échange thermique dans un échangeur externe disposé en amont de l'électrolyseur.

Or, les éléments internes à l'électrolyseur, notamment les cellules élémentaires, sont réalisés au moins en partie en céramique, ceux-ci sont donc très sensibles aux gradients de température et ne sont pas aptes à supporter un choc thermique, c'est-à-dire une différence de température importante, typiquement supérieure à 50°C. Cela implique donc de réduire au maximum l'écart de température entre celle des gaz entrants et celle des gaz sortants des compartiments anodiques et cathodiques, typiquement à une valeur inférieure ou égale à 50°C.

Par ailleurs, pour assurer la longévité de l'électrolyseur et son bon fonctionnement, il est préférable d'assurer une répartition de la température au sein de l'électrolyseur la plus homogène possible. On recherche typiquement des températures ne variant pas plus de 10°C dans tout l'empilement.

Pour éviter ces chocs thermiques comme indiqué précédemment, on utilise un échangeur thermique en amont de l'électrolyseur. Or, du fait des déperditions thermiques inévitables entre la sortie de l'électrolyseur et l'entrée de l'échangeur et le pincement de l'échangeur, il y a une différence d'au moins 50°C entre la température des gaz entrants et celle des gaz sortants.

Ceci impose donc d'avoir une température de gaz sortant supérieure à celle requise pour les gaz entrants. Or, cette différence de température entre les gaz entrants et sortants est défavorable à la recherche d'une température homogène dans l'électrolyseur.

En outre, cette température plus élevée nuit à la tenue mécanique des cellules. Ceci implique donc un choix de matériaux spécifiques; au-delà d'une température de 700°C, les matériaux adaptés sont peu nombreux et leur coût de revient est élevé.

Par ailleurs, des calories étant récupérées sur les gaz issus à la fois de l'anode et de la cathode, deux échangeurs avec étage à haute température sont requis. La présence de connexions à haute température entre l'électrolyseur et les échangeurs augmente également le coût et les difficultés d'intervention et de maintenance sur les échangeurs.

Enfin l'installation globale est de volume et de poids accrus.

Pour résoudre ces inconvénients, la demanderesse a proposé dans la demande de brevet WO 2009/040335 d'intégrer un échangeur thermique au sein de chaque interconnecteur, les circuits des fluides caloporteurs proposés étant celui de la vapeur d'eau. Ainsi, avec l'échangeur proposé, la vapeur d'eau avant son contact avec les cathodes pour la réaction d'électrolyse proprement dite subit un passage en interne de l'interconnecteur et se réchauffe donc au préalable.

Si la solution proposée, permet d'améliorer le fonctionnement d'un électrolyseur comparativement aux solutions selon l'état de l'art déjà proposées, elle présente de nombreux inconvénients que l'on peut énumérer comme suit.

Tout d'abord, le fluide caloporteur injecté à l'anode, en tant que gaz drainant, après son passage dans l'entre-plaque, ne peut être que de l'eau et non pas de l'air. En effet du fait que le fluide caloporteur doit servir également à réaliser les étanchéités, il est nécessaire d'injecter de la vapeur d'eau H₂O partout en surpression par rapport aux produits de la réaction afin d'éviter tout mélange entre l'hydrogène H2 produit et l'oxygène O₂ produit.

Ensuite, que l'on utilise l'interconnecteur avec l'échangeur proposé pour un électrolyseur EHT, du fait que depuis l'entrée du réacteur le caloporteur soit également le gaz réactif (vapeur d'eau), implique que le régime thermique et le taux de conversion, c'est-à-dire le taux d'avancement de la réaction (vapeur d'eau en hydrogène), sont couplés. En d'autres termes, si l'on agit sur le régime de fonctionnement thermique, en modifiant le débit du gaz réactif injecté dans le réacteur, on agit par voie de conséquence sur le taux de conversion.

Cela nuit donc à la souplesse d'utilisation de l'électrolyseur EHT dont les interconnecteurs intègrent un échangeur comme selon WO 2009/040335.

Egalement, l'interconnecteur avec échangeur proposé selon WO 2009/040335 est réalisé en deux plaques embouties, ce qui implique une tenue de l'étanchéité délicate à réaliser due aux reliefs même des plaques.

En pile à combustible SOFC, la réaction est généralement très exothermique. Pour limiter le gradient de température dans l'empilement, sans nuire au taux d'utilisation en combustible, la seule variable d'ajustement possible est le débit d'air qui est donc généralement augmenté par rapport au besoin de la réaction électrochimique. Cela pénalise le rendement puisqu'il est nécessaire d'augmenter la quantité d'air à comprimer en amont de la pile à combustible.

Toujours, en pile à combustible SOFC, des systèmes thermiques intégrés au sein de l'empilement ont déjà été proposés. On peut citer ici, le système thermique proposé dans la demande de brevet GB 2 151 840 A, dans lequel des rangées de tuyaux de refroidissement en serpentin supportés par une plaque viennent s'intercaler chacune au sein l'empilement. Outre le fait que le système proposé nuit à la compacité de la pile SOFC, le refroidissement divulgué ne peut pas être homogène puisque les rangées de tuyaux proposées ne s'intercalent pas entre deux motifs élémentaires consécutifs constitués chacun par un interconnecteur et une cellule, mais uniquement tous les cinq motifs dans l'empilement.

On connaît par ailleurs, dans le domaine de l'électrolyse à membrane acide, généralement connue sous l'acronyme anglo-saxon PEM pour «proton exchange membrane », la demande de brevet DE10015360A1 qui a proposé d'intégrer un échangeur à liquide caloporteur au sein d'un interconnecteur à deux plaques embouties.

Un tel interconnecteur avec échangeur ne peut être envisagé pour une application en EHT ou en SOFC car ni le liquide caloporteur, ni le silicone d'étanchéité du circuit du caloporteur ne sont aptes à supporter les hautes températures en EHT / SOFC.

En outre, tout comme pour l'interconnecteur avec échangeur proposé selon WO 2009/040335, l'interconnecteur selon cette demande est réalisé à l'aide de deux plaques embouties, ce qui rend la tenue de l'étanchéité délicate à obtenir.

La demande de brevet US 2007/287047 décrit également un interconnecteur comprenant deux plaques embouties superposées dans une pile à combustible SOFC.

Il existe un besoin pour améliorer la gestion des régimes de fonctionnement thermique d'un électrolyseur EHT et d'une pile à combustible SOFC, notamment afin de les découpler, c'est-à-dire les rendre indépendants du taux de conversion du ou des gaz réactifs (vapeur d'eau pour l'EHT, oxygène et combustible pour la pile SOFC), de s'affranchir de la nécessité d'une compression d'un fort débit d'air en amont et afin de ne pas nuire à la tenue d'étanchéité du fait de reliefs des plaques embouties des interconnecteurs, ni à la compacité de l'électrolyseur EHT ou de la pile SOFC.

Un but de l'invention est de répondre au moins en partie à ce besoin.

### Exposé de l'invention

Pour ce faire, la divulgation illustre, sous l'un de ses aspects, selon une première alternative un procédé d'électrolyse à haute température de la vapeur d'eau H₂O ou respectivement d'électrolyse à haute température de dioxyde de carbone (CO₂) ou respectivement de co-électrolyse à haute température avec le dioxyde de carbone (CO₂), mis en œuvre dans un réacteur comportant un empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires. Selon cette première alternative de l'invention, on réalise simultanément les étapes suivantes:
a/ on alimente, on distribue la vapeur d'eau ou respectivement le dioxyde de carbone CO₂ ou respectivement la vapeur d'eau mélangée au dioxyde de carbone CO₂ et on récupère l'hydrogène (H₂) produit ou respectivement le monoxyde de carbone (CO) produit ou respectivement l'hydrogène et le monoxyde de carbone CO produits et le cas échéant, la vapeur d'eau, ou respectivement le dioxyde de carbone CO₂ ou respectivement la vapeur d'eau et le dioxyde de carbone CO₂ en surplus à chaque cathode des cellules élémentaires,
b/ on alimente, on distribue un gaz drainant, tel que de l'air, et on récupère le gaz drainant et l'oxygène (O₂) produit à chaque anode des cellules élémentaires,
c/ on alimente et on distribue au sein de chaque interconnecteur, un gaz caloporteur apte à amener ou évacuer de la chaleur à chaque cellule élémentaire,
l'étape c/ étant réalisée depuis l'entrée du réacteur dans un circuit distinct de celui du gaz drainant et de l'oxygène l'O₂ produit, et distinct de celui de l'hydrogène H2 produit ou respectivement de celui du monoxyde de carbone produit ou respectivement de celui de l'hydrogène et du monoxyde de carbone produits, soit jusqu'à la sortie du réacteur, soit jusqu'à au moins une première zone en amont de la sortie du réacteur, dans laquelle le gaz caloporteur se mélange avec l'hydrogène produit en amont ou respectivement avec le monoxyde de carbone produit en amont ou respectivement avec de l'hydrogène et du monoxyde de carbone produits en amont et le cas échéant, avec la vapeur d'eau ou respectivement le dioxyde de carbone CO₂ ou respectivement la vapeur d'eau et le dioxyde de carbone CO₂ en surplus, soit jusqu'à au moins une deuxième zone en amont de la sortie du réacteur, dans laquelle le gaz caloporteur se mélange avec l'oxygène produit et le gaz drainant, soit jusqu'à la fois au moins la première et la deuxième zone en amont.

Selon un mode de réalisation, lorsque le gaz caloporteur est chimiquement neutre vis-à-vis de l'hydrogène et de l'oxygène, l'étape c/ peut être réalisée soit jusqu'à la sortie du réacteur, soit jusqu'à la première et/ou la deuxième zone en amont.

Selon un autre mode de réalisation, lorsque le gaz caloporteur ne réagit pas avec l'hydrogène, l'étape c/ peut être réalisée soit jusqu'à la sortie du réacteur, soit uniquement jusqu'à la première zone en amont.

Selon un autre mode de réalisation, lorsque le gaz caloporteur ne réagit pas avec l'oxygène, l'étape c/ peut être réalisée soit jusqu'à la sortie du réacteur, soit uniquement jusqu'à la deuxième zone en amont.

Selon une variante de réalisation, lorsque le gaz caloporteur est mélangé avec l'hydrogène produit en amont ou respectivement du monoxyde de carbone produit en amont ou respectivement avec de l'hydrogène et du monoxyde de carbone produits en amont de la première zone, il peut être choisi parmi le dioxyde de carbone (CO2), l'hydrogène (H2), le monoxyde de carbone (CO), la vapeur d'eau (H2O) ou des mélanges de ceux-ci.

Selon cette autre variante, le procédé est un procédé de co-électrolyse, le dioxyde de carbone en tant que gaz caloporteur se mélangeant avec la vapeur d'eau et l'hydrogène produit à partir de la première zone amont.

Selon une autre variante de réalisation, lorsque le gaz caloporteur est mélangé avec l'oxygène produit en amont de la deuxième zone et le gaz drainant, il peut être choisi parmi l'air, l'oxygène (O₂) ou un mélange de ceux-ci.

Selon un mode de réalisation, on définit un régime de fonctionnement en mode exothermique pour l'électrolyse ou respectivement la co-électrolyse de la vapeur d'eau aux cathodes des cellules élémentaires, la chaleur dégagée par l'électrolyse ou respectivement la co-électrolyse étant évacuée par le gaz caloporteur.

Selon un autre mode de réalisation, on définit un régime de fonctionnement en mode endothermique pour l'électrolyse ou respectivement la co-électrolyse de la vapeur d'eau aux cathodes des cellules élémentaires, la chaleur absorbée par l'électrolyse ou respectivement la co-électrolyse étant apportée par le gaz caloporteur.

La divulgation illustre également selon une deuxième alternative un procédé de production d'électricité à haute température, mis en œuvre dans une pile à combustible à oxydes solides (SOFC) comportant un empilement de cellules électrochimiques intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires.

Selon cette deuxième alternative, on réalise simultanément les étapes suivantes:
a1/ on alimente, on distribue de l'air et/ou de l'oxygène (O₂) et on récupère l'air et/ou de l'oxygène (O₂) en surplus à chaque cathode des cellules élémentaires,
b1/ on alimente, on distribue un combustible, et on récupère l'eau et/ou le dioxyde de carbone (CO₂) produit(s) et le cas échéant, le combustible en surplus à chaque anode des cellules élémentaires,
cl/ on alimente et on distribue au sein de chaque interconnecteur, un gaz caloporteur apte à évacuer de la chaleur produite à chaque cellule élémentaire,
l'étape c1/ étant réalisée dans un circuit distinct de celui et de l'eau et/ou du dioxyde de carbone (CO₂) produit(s)et le cas échéant du combustible en surplus et distinct de celui de l'air et/ou de l'oxygène (O₂) soit jusqu'à la sortie du réacteur, soit jusqu'à au moins une première zone en amont de la sortie du réacteur, dans laquelle le gaz caloporteur se mélange avec l'eau et/ou le dioxyde de carbone (CO₂) produit(s) en amont et le cas échéant le combustible en surplus, soit jusqu'à au moins une deuxième zone en amont de la sortie du réacteur, dans laquelle le gaz caloporteur se mélange avec l'air et/ou de l'oxygène (O₂) provenant de l'amont.

Selon un mode de réalisation, lorsque le gaz caloporteur est un combustible, l'étape c1/ peut être réalisée soit jusqu'à la sortie du réacteur, soit uniquement jusqu'à la première zone en amont. Selon ce mode et selon une variante de réalisation, lorsque le gaz caloporteur est mélangé avec l'eau et/ou le dioxyde de carbone (CO₂) produit(s) en amont et le cas échéant le combustible en surplus, il peut être choisi parmi l'hydrogène, la vapeur d'eau (H₂O), le dioxyde de carbone (CO₂), le méthane (CH₄), le monoxyde de carbone (CO) ou des mélanges de ceux-ci.

Selon un autre mode de réalisation, lorsque le gaz est un comburant, l'étape cl/ peut être réalisée soit jusqu'à la sortie du réacteur, soit uniquement jusqu'à la deuxième zone en amont. Selon cet autre mode et selon une variante de réalisation, lorsque le gaz caloporteur est mélangé avec l'air et/ou de l'oxygène (O₂) provenant de l'amont de la deuxième zone, il peut être choisi parmi l'air, l'air non appauvri en oxygène, l'oxygène ou des mélanges de ceux-ci.

Autrement dit, le procédé selon la divulgation consiste essentiellement à prévoir un circuit de fluide caloporteur intégré au sein d'un interconnecteur pour électrolyseur EHT ou pile à combustible SOFC, qui est distinct de chacun des circuits du ou des gaz réactifs ou du gaz drainant qui vient en contact avec une anode ou une cathode de l'empilement de cellules élémentaires, puisque on ne souhaite pas introduire le fluide caloporteur en entrée d'anode ou de cathode.

Ainsi, on peut ajuster au mieux le débit et la température du fluide caloporteur pour gérer le régime de fonctionnement soit exothermique pour l'EHT et pour la pile SOFC, soit endothermique pour l'EHT comme pour la pile SOFC, notamment en absence de courant pour cette dernière, et ce sans que cela influe nécessairement sur le taux de conversion visé.

On peut tout de même choisir avantageusement un fluide caloporteur qui soit un gaz réactif afin de l'injecter à souhait dans une zone ou plusieurs zones en amont de la sortie du réacteur EHT ou de pile SOFC, afin d'optimiser la réaction visée, à savoir respectivement l'électrolyse ou co-électrolyse de la vapeur d'eau ou la production d'électricité par oxydation d'un combustible en eau. On peut ainsi avantageusement augmenter le taux de conversion en hydrogène sans diminuer ou augmenter de manière trop excessive la température au sein de l'électrolyseur EHT. L'injection en caloporteur des cellules différentes dans l'empilement peut permettre de les alimenter en gaz réactifs avec des débits différents, ce qui peut être avantageux au cours du vieillissement de toutes les cellules.

L'invention concerne sous un de ses aspects, défini par la revendication 1, un dispositif formant un interconnecteur électrique et fluidique pour l'électrolyse à haute température de la vapeur d'eau (EHT) de co-électrolyse à haute température avec le dioxyde de carbone CO₂, ou une pile à combustible SOFC, le dispositif consistant en trois tôles, allongées selon deux axes de symétrie (X, Y) orthogonaux entre eux, l'une des tôles d'extrémité étant destinée à venir en contact mécanique avec le plan d'une cathode d'une cellule électrochimique élémentaire et une autre des tôles étant destinée à venir en contact mécanique avec le plan d'une anode d'une cellule électrochimique élémentaire adjacente, chacune des deux cellules d'électrochimiques élémentaires adjacentes de type SOEC étant formée d'une cathode, d'une anode, et d'un électrolyte intercalé entre la cathode et l'anode.

Dans ce dispositif selon l'invention :
- l'une des trois tôles, dite tôle centrale, comporte une partie centrale emboutie comportant des emboutis définissant des canaux et, est percée, à la périphérie de sa partie centrale, d'au moins six lumières, les premières à quatrième lumières étant allongées chacune sur une longueur correspondant à une partie de la longueur de la partie centrale selon l'un des axes X et étant réparties deux à deux de part et d'autre dudit axe X, tandis que les cinquième et sixième lumières sont allongées chacune sur une longueur correspondant sensiblement à la longueur de la partie centrale selon l'autre des axes Y,
- une des tôles d'extrémité, dite première tôle d'extrémité, étant une tôle plane comportant une partie centrale et, la première tôle d'extrémité étant percée, à la périphérie de sa partie centrale, d'au moins six lumières, les premières à quatrième lumières étant allongées chacune sur une longueur correspondant à une partie de la longueur de la partie centrale de la première tôle d'extrémité selon l'un des axes X et étant réparties deux à deux de part et d'autre dudit axe X, tandis que les cinquième et sixième lumières sont allongées chacune sur une longueur correspondant sensiblement à la longueur de la partie centrale de la première tôle d'extrémité selon l'autre des axes Y, la partie centrale étant percée d'au moins deux fentes allongées chacune sur une longueur correspondant sensiblement à la longueur de la partie centrale de la première tôle d'extrémité selon l'autre des axes Y,
- l'autre des tôles d'extrémité, dite deuxième tôle d'extrémité, étant une tôle plane comportant une partie centrale évidée et est et, est percée, à la périphérie de sa partie centrale, d'au moins six lumières, les premières à quatrième lumières étant allongées chacune sur une longueur correspondant à une partie de la longueur de la partie centrale de la deuxième tôle d'extrémité selon l'un des axes X et étant réparties deux à deux de part et d'autre dudit axe X, tandis que les cinquième et sixième lumières sont allongées chacune sur une longueur correspondant sensiblement à la longueur de la partie centrale de la deuxième tôle d'extrémité selon l'autre des axes Y,
- les six lumières de la tôle centrale comportent chacune, des languettes de tôles espacées les unes des autres en formant un peigne, chacune des fentes, définie entre le bord d'une des lumières et une languette ou entre deux languettes consécutives.

Dans cet interconnecteur selon l'invention, les trois tôles sont stratifiées et assemblées entre elles telles que:
- chacune des première à sixième lumières de l'une des trois tôles est en communication fluidique individuellement respectivement avec l'une des première à sixième lumières correspondantes des deux autres tôles,
- la première lumière de la tôle centrale est en communication fluidique avec la troisième lumière de la tôle centrale par le biais des espaces entre languettes de la première lumière, des canaux définis par les emboutis et des espaces entre languettes de la troisième lumière de la tôle centrale,
- la deuxième lumière de la tôle centrale est en communication fluidique avec la quatrième lumière de la tôle centrale par le biais des espaces entre languettes de la deuxième lumière de la tôle centrale, de la chambre intérieure délimitée entre les emboutis et la partie centrale plane de la première tôle d'extrémité et des espaces entre languettes de la quatrième lumière de la tôle centrale,
- la cinquième et la sixième lumière de la première tôle d'extrémité sont en communication fluidique avec l'une des fentes et respectivement l'autre des fentes de la première tôle d'extrémité par le biais des espaces entre languettes de la cinquième et respectivement la sixième lumière de la tôle centrale.

Par « lumière » on entend ici et dans le cadre de l'invention, un trou débouchant de part et d'autre d'une tôle métallique.

Grâce à un tel interconnecteur qui peut être utilisé à la fois dans une pile à combustible SOFC et dans un électrolyseur EHT, on peut faire circuler depuis l'entrée du réacteur un fluide caloporteur distinct des circuits de gaz réactifs et de gaz drainant, ce qui permet de gérer au mieux les régimes de fonctionnement exothermique de la pile SOFC et soit exothermique, soit endothermique de l'électrolyseur EHT.

Dans un interconnecteur selon l'invention, les tôles d'extrémité qui sont celles qui participent à la tenue des joints aux hautes températures, typiquement à 800°C, sont planes, tous les reliefs étant réalisés par emboutissage dans la tôle centrale. Ainsi, selon l'invention, on intègre un échangeur au sein même d'un interconnecteur de faible épaisseur tout en garantissant des zones planes sur l'interconnecteur entre les clarinettes (lumières d'amenée et de récupération des gaz) et une cellule électrochimique, ce qui permet de favoriser la tenue des joints en verre à haute température.

Le fait que les deux tôles d'extrémité soient planes permet d'envisager de faire varier leur épaisseur, pour des questions de rigidité ou de hauteur de passage de gaz côté O2 si besoin, sans modifier la raideur du contact électrique. Autrement dit, on peut réaliser un amincissement de ces tôles d'extrémité, ce qui est également avantageux en termes d'approvisionnement et/ou de coût.

Enfin, selon la position de la cellule électrochimique élémentaire, il peut être nécessaire de faire varier le débit du caloporteur, par exemple beaucoup de débit au centre de l'empilement et peu sur les bords, ce que l'on peut faire aisément en adaptant le nombre de languettes de passage pour le fluide caloporteur.

Selon un premier mode de réalisation avantageux,
- la première tôle d'extrémité comporte en outre une ou plusieurs troisième fente(s) allongée(s) sur une longueur correspondant sensiblement à la longueur de la partie centrale selon l'autre des axes Y, la(les) troisième(s) fente(s) étant agencée entre les deux autres fentes de la première tôle d'extrémité,
- les trois tôles sont assemblées entre elles telles que la(les) troisième(s) fente(s) allongée(s) de la première tôle d'extrémité est (sont) en communication fluidique avec la chambre intérieure.

Selon un deuxième mode de réalisation avantageux :
- la tôle centrale comporte en outre une ou plusieurs fente(s) allongée(s) sur une longueur correspondant sensiblement à la longueur de la partie centrale selon l'autre Y des axes, la(les) fente(s) étant agencée(s) le long d'un canal embouti,
- les trois tôles sont assemblées entre elles telles que la(les) fente(s) allongée(s) de la tôle centrale est (sont) en communication fluidique avec la chambre intérieure.

Selon un troisième mode de réalisation avantageux :
- la tôle centrale comporte en outre une ou plusieurs fente(s) allongée(s) sur une longueur correspondant sensiblement à la longueur de la partie centrale selon l'autre Y des axes, la(les) fente(s) étant agencée(s) transversalement aux canaux emboutis,
- les trois tôles sont assemblées entre elles telles que la(les) fente(s) allongée(s) de la tôle centrale est (sont) en communication fluidique avec la chambre intérieure.

Autrement dit, on peut injecter le fluide caloporteur dans une zone en aval de l'entrée du réacteur, c'est-à-dire en aval du commencement de la réaction d'électrolyse ou de co-électrolyse pour l'EHT ou d'oxydation du combustible pour la pile SOFC, ce qui permet de gérer à la fois de gérer la thermique et le mélange de gaz le long du trajet sur une cellule.

A titre d'exemple avantageux, on peut ainsi enrichir en O₂, la cathode SOFC dans une zone proche de la sortie en pile SOFC, ou en mélange H₂O/CO₂ dans une zone proche de la sortie cathodique en co-électrolyse.

A titre d'exemple également avantageux, on peut envisager d'injecter du méthane (CH4) en cours de réaction côté anode SOFC: ainsi, si on alimente la pile en gaz issu de reformage la réaction peut être très exothermique en entrée de cellules électrochimiques, et une première injection de méthane froid en tant que fluide caloporteur en entrée des cellules permet de refroidir celles-ci, puis une deuxième injection de méthane en aval dans une zone de la cellule où l'eau produite est déjà présente permet également de refroidir tout en évitant un dépôt de carbone néfaste.

L'injection du gaz caloporteur peut être différenciée selon l'emplacement dans l'empilement de cellules élémentaires en modifiant les pertes de charges introduites par les languettes de la tôle centrale. Avantageusement, on peut ainsi injecter un fluide caloporteur dans les compartiments H₂/H₂O, cela peut aussi permettre d'alimenter les cellules avec des débits différents, et présenter un intérêt en cours de vieillissement.

Le fait d'avoir plusieurs lumières par lesquelles on peut injecter précisément à l'anode ou la cathode d'une cellule, le fluide caloporteur en plusieurs zones permet de mieux répartir le débit et de piloter la composition du gaz tout le long de la cellule.

De préférence, les trois tôles sont assemblées entre elles par soudure ou par brasure, de préférence encore par des lignes de soudure (ls) fermées individuellement autour de chaque communication fluidique.

De préférence, les trois tôles sont en acier ferritique à environ 20% de chrome, de préférence en CROFER® 22APU ou le FT18TNb, à base Nickel de type Inconel® 600 ou Haynes®. Chacune des trois tôles a de préférence une épaisseur comprise entre 0,05 et 1mm.

Selon une variante avantageuse, les languettes de la deuxième lumière de la tôle centrale et les languettes de la quatrième lumière de la tôle centrale sont embouties sur au moins une partie de leur longueur, leurs emboutis étant en appui contre la partie périphérique de la première tôle d'extrémité. Les emboutis de ces languettes permettent de garantir l'espacement des tôles dans cette zone et facilitent ainsi le passage du fluide caloporteur sous la tôle centrale pour qu'il parvienne à la zone d'échange thermique.

De préférence, les trois tôles sont percées à leur périphérie de lumières supplémentaires adaptées pour loger des tirants de fixation.

L'invention concerne sous un autre de ses aspects un réacteur d'électrolyse ou de co-électrolyse comportant un empilement de cellules électrochimiques élémentaires à oxydes solides formées chacune d'une cathode, d'une anode et d'un électrolyte intercalé entre la cathode et l'anode, et une pluralité d'interconnecteurs électrique et fluidique qui viennent d'être décrits, agencés chacun entre deux cellules élémentaires adjacentes avec la première tôle d'extrémité en contact électrique avec la cathode de l'une des deux cellules élémentaires et les emboutis de la tôle centrale avec l'anode de l'autre des deux cellules élémentaires.

L'invention concerne encore un procédé de fonctionnement d'un tel réacteur d'électrolyse selon la revendication 6, selon lequel :
- on alimente les premières lumières en gaz drainant, tel que de l'air et/ou de l'oxygène (O2), et simultanément les deuxièmes lumières en un gaz caloporteur apte à évacuer ou amener de la chaleur, le gaz caloporteur étant neutre chimiquement vis-à-vis de l'hydrogène,
- on alimente les cinquièmes lumières en vapeur d'eau et/ou en hydrogène,
- on récupère l'hydrogène produit par l'électrolyse de la vapeur d'eau, et le cas échéant, le gaz produit par la co-électrolyse de la vapeur d'eau et du gaz caloporteur introduit par la (les) troisième(s) fente(s) de la première tôle d'extrémité, dans les sixièmes lumières et simultanément le gaz caloporteur dans les quatrièmes lumières et simultanément l'oxygène produit par l'électrolyse de la vapeur d'eau et le cas échéant par la co-électrolyse, dans les troisièmes lumières.

L'invention concerne encore un procédé de fonctionnement d'un tel réacteur d'électrolyse selon la revendication 7, selon lequel :
- on alimente les premières lumières en gaz drainant, tel que de l'air et/ou de l'oxygène (O2), et simultanément les deuxièmes lumières en un gaz caloporteur apte à évacuer ou amener de la chaleur, le gaz caloporteur étant neutre chimiquement vis-à-vis de l'oxygène,
- on alimente les cinquièmes lumières en vapeur d'eau et/ou en hydrogène,
- on récupère l'hydrogène produit par l'électrolyse de la vapeur d'eau, et le cas échéant, le gaz produit par la co-électrolyse de la vapeur d'eau et du gaz caloporteur introduit par la (les) fente(s) allongées de la tôle centrale, dans les sixièmes lumières et simultanément le gaz caloporteur dans les quatrièmes lumières et simultanément l'oxygène produit par l'électrolyse de la vapeur d'eau et le cas échéant par la co-électrolyse, dans les troisièmes lumières.

L'invention concerne sous encore un autre aspect, une pile à combustible (SOFC) comportant un empilement de cellules électrochimiques élémentaires à oxydes solides formées chacune d'une anode, d'une cathode et d'un électrolyte intercalé entre la cathode et l'anode, et une pluralité d'interconnecteurs électrique et fluidique décrits précédemment, agencés chacun entre deux cellules élémentaires adjacentes avec la première tôle d'extrémité en contact électrique avec l'anode de l'une des deux cellules élémentaires et les emboutis de la tôle centrale avec la cathode de l'autre des deux cellules élémentaires.

L'invention concerne également un procédé de fonctionnement d'une telle pile à combustible (SOFC) selon la revendication 12, selon lequel:
- on alimente les premières lumières en air et/ou en oxygène, et simultanément les deuxièmes lumières en un gaz caloporteur apte à évacuer de la chaleur, le gaz caloporteur étant en outre un combustible,
- on alimente les cinquièmes lumières en combustible,
- on récupère l'eau et/ou le dioxyde de carbone (CO₂) produit(s), et le cas échéant, le combustible en surplus et le cas échéant, le gaz caloporteur introduit par la (les) fente(s) de la tôle d'extrémité, dans les sixièmes lumières et simultanément le gaz caloporteur dans les quatrièmes lumières et simultanément l'air et/ou l'oxygène, dans les troisièmes lumières.

L'invention concerne enfin un procédé de fonctionnement d'une telle pile à combustible (SOFC) selon la revendication 13, selon lequel:
- on alimente les premières lumières en air et/ou en oxygène, et simultanément les deuxièmes lumières en un gaz caloporteur apte à évacuer de la chaleur, le gaz caloporteur étant en outre un comburant,
- on alimente les cinquièmes lumières en combustible,
- on récupère l'eau et/ou le dioxyde de carbone (CO₂) produit(s), et le cas échéant, le combustible en surplus et le cas échéant, le gaz caloporteur introduit par la (les) fente(s) de la tôle centrale, dans les sixièmes lumières et simultanément le gaz caloporteur dans les quatrièmes lumières et simultanément l'air et/ou l'oxygène, dans les troisièmes lumières.

L'invention est avantageusement mise en œuvre avec des empilements de cellules électrochimiques élémentaires à cathode support.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène ou à monoxyde de carbone (cathode) plus épaisse qui sert donc de support.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique montrant le principe de fonctionnement d'un électrolyseur d'eau à haute température;
- la figure 2 est une vue schématique en éclaté d'une partie d'un électrolyseur de vapeur d'eau à haute température comprenant des interconnecteurs selon l'état de l'art,
- la figure 3 est une vue schématique en éclaté d'une partie d'un pile à combustible SOFC comprenant des interconnecteurs selon l'état de l'art,
- la figure 4 est une vue schématique en coupe partielle d'un électrolyseur EHT ou d'une pile à combustible de type SOFC selon l'invention avec un échangeur de chaleur intégré au sein duquel circule un fluide caloporteur,
- la figure 5 est une vue en perspective d'un interconnecteur assemblé d'un électrolyseur EHT ou d'une pile à combustible de type SOFC, avec un échangeur de chaleur intégré au sein duquel circule un fluide caloporteur selon un mode de réalisation de l'invention,
- la figure 6 est une vue en éclaté des trois tôles constituant l'interconnecteur selon la figure 5,
- la figure 7 est une vue en perspective d'un premier mode avantageux de réalisation d'un des tôles d'extrémité de l'interconnecteur selon les figures 5 et 6,
- la figure 8 est une vue en perspective d'un deuxième mode avantageux de réalisation d'un des tôles d'extrémité de l'interconnecteur selon les figures 5 et 6,
- la figure 9 est une vue en perspective d'un troisième mode avantageux de réalisation d'un des tôles d'extrémité de l'interconnecteur selon les figures 5 et 6,
- les figures 10A à 10C sont des vues de détail en perspective et en coupe partielle respectivement avec la tôle centrale, avec une des tôles d'extrémités stratifiée à la tôle centrale et enfin avec les trois tôles stratifiées et assemblées d'un interconnecteur selon les figures 5 à 9, les figures montrant les différents éléments de l'alimentation et la distribution du gaz caloporteur au sein de l'interconnecteur,
- les figures 11 à 15 sont des vues similaires à la figure 10C, les figures montrant la réalisation de l'alimentation et la distribution du gaz caloporteur au sein de l'interconnecteur,
- les figures 16 et 17 sont des vues de détail, en perspective et en coupe des trois tôles stratifiées et assemblées d'un interconnecteur selon les figures 5 à 9, les figures montrant les différents éléments de l'alimentation et la distribution de l'air en tant que gaz drainant au sein de l'interconnecteur utilisé dans un électrolyseur EHT,
- les figures 18 et 19 sont des vues de détail, en perspective et en coupe des trois tôles stratifiées et assemblées d'un interconnecteur selon les figures 5 à 9, les figures montrant les différents éléments de l'alimentation et la distribution de la vapeur d'eau en tant que gaz réactif au sein de l'interconnecteur utilisé dans un électrolyseur EHT,
- les figures 20 et 21 sont des vues de face du côté d'une des tôles d'extrémité d'un interconnecteur selon les figures 5 à 9, montrant les lignes de soudure réalisant l'assemblage de l'interconnecteur,
- les figures 22 et 23 sont des vues de détail, en perspective et en coupe des trois tôles stratifiées et assemblées d'un interconnecteur selon les figures 5 à 9, montrant également les lignes de soudure réalisant l'assemblage de l'interconnecteur du côté de l'une des tôles d'extrémité de l'interconnecteur,
- la figure 24 est une vue de face du côté de l'autre des tôles d'extrémité d'un interconnecteur selon les figures 5 à 9, montrant les lignes de soudure réalisant l'assemblage de l'interconnecteur.

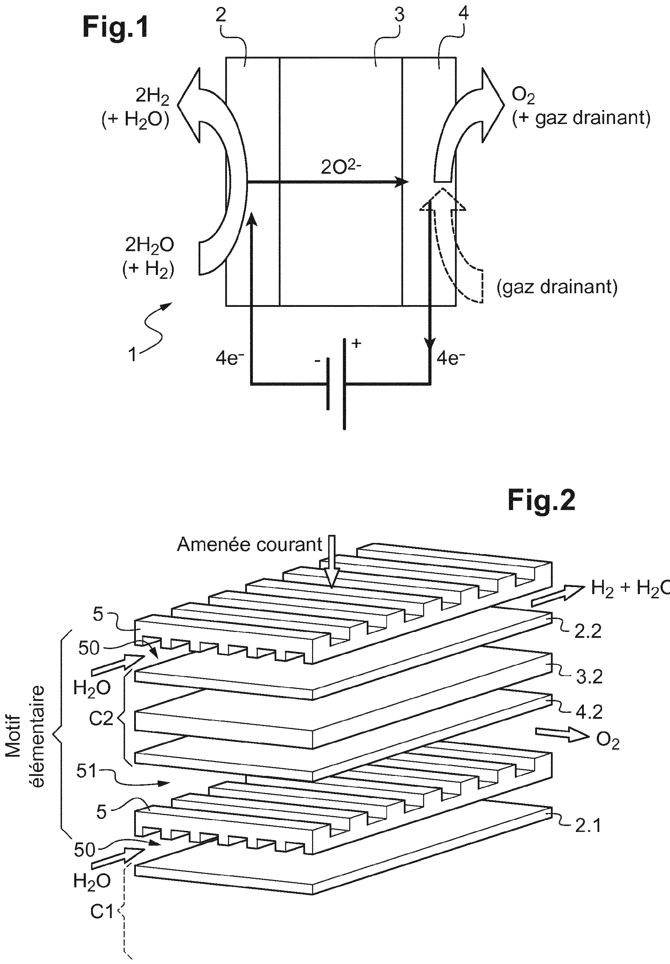

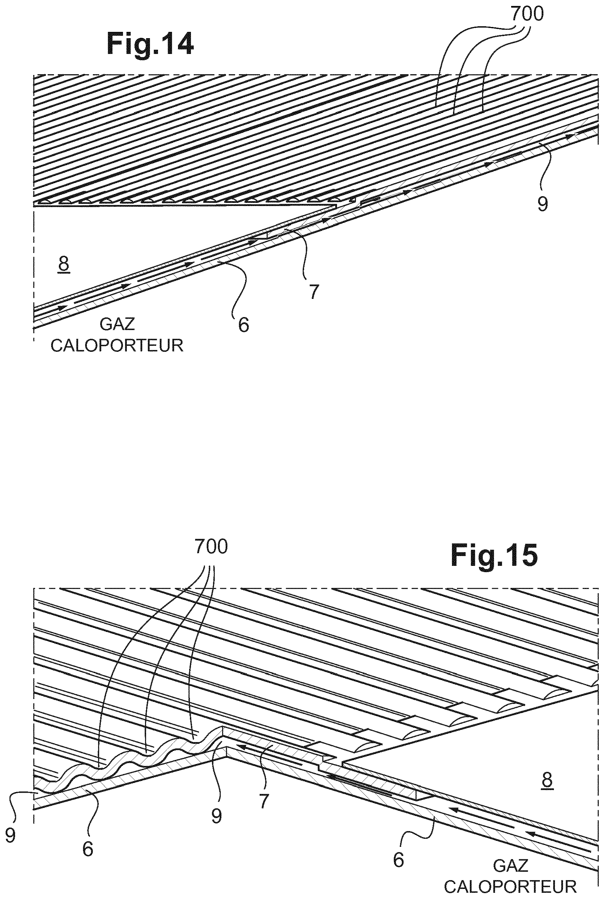

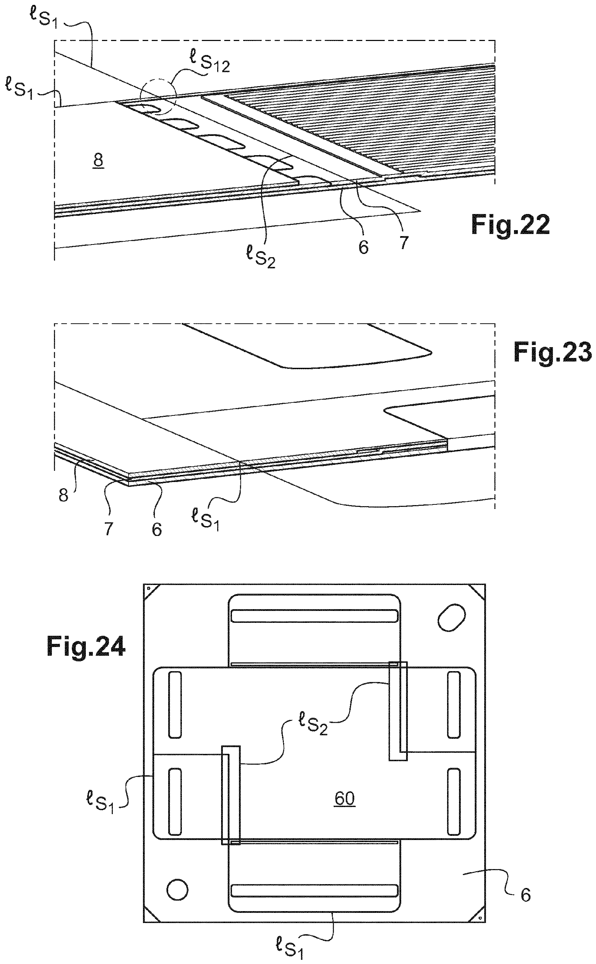

On précise également que sur l'ensemble des figures 1 à 24, les symboles et les flèches d'alimentation d'une part de vapeur d'eau H2O, de distribution et de récupération de dihydrogène H2 et d'oxygène O2, et du courant et d'autre part de dioxyde de carbone CO2, de distribution et de récupération de monoxyde de carbone CO et d'oxygène O2, et du courant sont montrés à des fins de clarté et de précision, pour illustrer le fonctionnement d'un réacteur d'électrolyse de vapeur d'eau selon l'état de l'art et d'un réacteur d'électrolyse de vapeur d'eau selon l'invention.

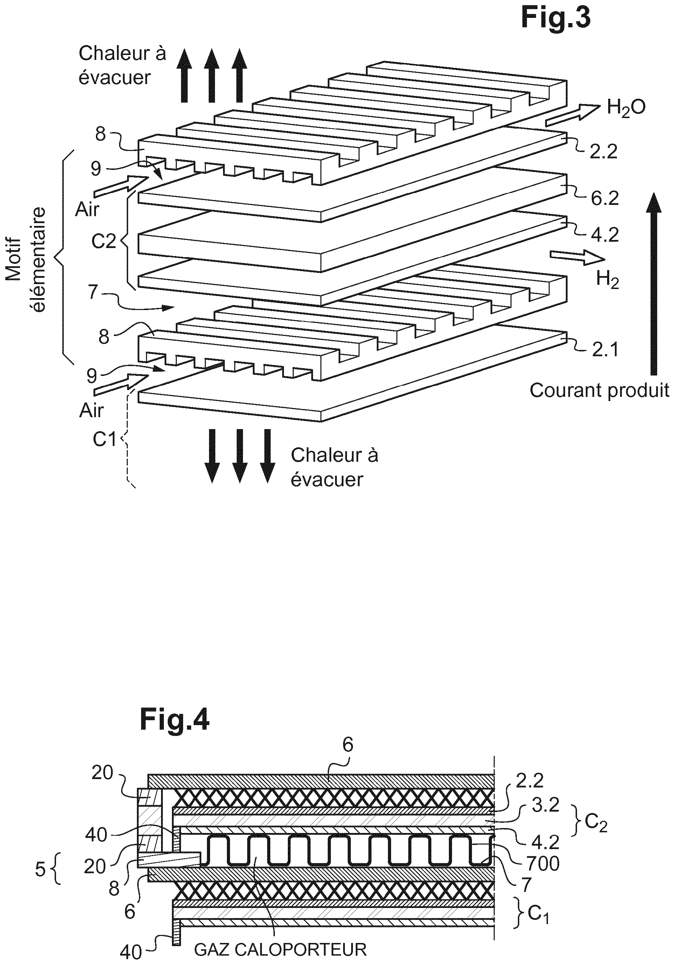

On précise également que la description des figures 4 à 24 d'un interconnecteur avec échangeur de chaleur intégré est faite pour une utilisation dans un réacteur d'électrolyse de vapeur d'eau (EHT) mais qu'elle s'applique également à une utilisation pour de la co-électrolyse de vapeur d'eau (EHT) ou pour une pile à combustible (SOFC), les gaz réactifs ou drainants introduits étant alors différents.

On précise enfin que tous les électrolyseurs ou toutes les piles à combustible décrits sont de type à oxydes solides (SOEC, acronyme anglais de « *Solid Oxyde Electrolyte Cell* » ou SOFC, « *Solid Oxyde Fuel Cell* ») fonctionnant à haute température. Ainsi, tous les constituants (anode/électrolyte/cathode) d'une cellule d'électrolyse sont des céramiques. La haute température de fonctionnement d'un électrolyseur (réacteur d'électrolyse) est typiquement comprise entre 600°C et 1000°C.

Typiquement, les caractéristiques d'une cellule électrochimique élémentaire SOEC convenant à l'invention, du type cathode support (CSC), peuvent être celles indiquées comme suit dans le tableau ci-dessous.

**TABLEAU**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode 4** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte 3** | | |
|---|---|---|
| Matériau constitutif | | YSZ |
| Epaisseur | µm | |
| Résistivité | Ω m | 0,42 |

Un électrolyseur d'eau est un dispositif électrochimique de production d'hydrogène (et d'oxygène) sous l'effet d'un courant électrique.

Dans les électrolyseurs à haute température EHT, l'électrolyse de l'eau à haute température est réalisée à partir de vapeur d'eau. La fonction d'un électrolyseur haute température EHT est de transformer la vapeur d'eau en hydrogène et en oxygène selon la réaction suivante:

2H2O → 2H2 + O2.

Cette réaction est réalisée par voie électrochimique dans les cellules de l'électrolyseur. Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2 H2O + 4 e⁻ → 2 H2 + 2 O²⁻.

A l'anode 4, la demi-réaction est la suivante:

2O²⁻ → O2 + 4 e⁻.

L'électrolyte 3 intercalé entre les deux électrodes 2, 4 est le lieu de migration des ions O²⁻, sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H2 et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

Un fonctionnement satisfaisant d'un électrolyseur EHT nécessite:
- une bonne isolation électrique entre deux interconnecteurs adjacents dans l'empilement, sous peine de court-circuiter la cellule d'électrolyse élémentaire intercalée entre les deux interconnecteurs,
- un bon contact électrique et une surface de contact suffisante entre chaque cellule et interconnecteur, afin d'obtenir la plus faible résistance ohmique entre cellule et interconnecteurs,
- une bonne étanchéité entre les deux compartiments distincts, i.e. et cathodique, sous peine de recombinaison des gaz produits entraînant une baisse de rendement et surtout l'apparition de points chauds endommageant l'électrolyseur,
- une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires Cl, C2. de type à oxyde solide (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2....

L'interconnecteur 5 est un composant en alliage métallique qui assure la séparation entre les compartiments cathodique 50 et anodique 51, définis par les volumes compris entre l'interconnecteur 5 et l'anode adjacente 4.2 et entre l'interconnecteur 5 et la cathode adjacente 2.1 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 51 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau par celle-ci.

L'interconnecteur 5 assure le passage du courant entre les cellules C1 et C2 par contact direct avec les électrodes adjacentes, c'est-à-dire entre l'anode 4.2 et la cathode 2.1.

Un même interconnecteur 5 peut être utilisé dans un réacteur de co-électrolyse EHT dans lequel à la place de la vapeur d'eau, on alimente et on distribue aux cathodes un mélange de vapeur d'eau et de dioxyde de carbone (CO₂).

La réaction globale d'électrolyse ou de co-électrolyse au sein d'un réacteur EHT peut soit être exothermique, soit endothermique.

La figure 3 représente une vue éclatée de motifs élémentaires d'une pile à combustible SOFC selon l'état de l'art : les mêmes motifs élémentaires que ceux de la figure 2 sont mis en oeuvre pour une pile à combustible SOFC avec des cellules de piles élémentaires C1, C2 et les interconnecteurs 5. Les cathodes 2.1, 2.2...de l'électrolyseur EHT sont alors utilisées en tant qu'anodes en pile SOFC et les anodes 4.1, 4.2... de l'electrolyseur EHT sont quant à elles utilisées en cathodes en piles SOFC. Ainsi, en fonctionnement en pile SOFC, l'injection de l'air contenant l'oxygène dans chaque motif élémentaire se fait dans le compartiment cathodique 51. Le collectage de l'eau produit à l'anode est effectué dans le compartiment anodique en aval de la cellule C1,C2, après recombinaison de l'eau par celle-ci avec l'hydrogène H2 injecté à l'anode 2.2 dans chaque compartiment anodique en amont de la cellule C1, C2. Le courant produit lors de la recombinaison de l'eau est collecté par les interconnecteurs 5.

La réaction globale au sein d'une pile à combustible SOFC est exothermique.

Pour gérer au mieux le régime de fonctionnement thermique à la fois pour une application en électrolyse ou co-électrolyse EHT et en pile à combustible SOFC, les inventeurs ont pensé à intégrer un échangeur thermique au sein de l'interconnecteur avec un circuit du fluide caloporteur, distinct depuis l'entrée du réacteur, des circuits des gaz réactifs et du gaz drainant jusqu'à soit la sortie du réacteur soit une zone dans laquelle le caloporteur peut se mélanger avec l'un des gaz réactifs ou le gaz drainant, afin de gérer la fluidique de mélange des gaz.

La figure 4 montre schématiquement l'intégration d'un circuit de gaz caloporteur au sein des emboutis 700 d'une tôle centrale d'un interconnecteur 5 selon l'invention, réalisé à partir de trois tôles 6, 7 et 8 comme décrit ci-après. Sur cette figure sont montrés par ailleurs les joints d'étanchéité 20, 40 respectivement dédiés aux compartiments de circulation de la vapeur d'eau et de l'hydrogène et aux compartiments de circulation de l'air et de l'oxygène produit. Comme détaillé ci-après, les tôles d'extrémité 6 et 8 de l'interconnecteur 5 sur lesquelles portent les joints 20 et 40 sont des tôles planes, ce qui permet d'avoir une bonne tenue de ces joints aux hautes températures, typiquement à 800°C.

Pour une application en EHT, lorsqu'on cherche à mélanger le gaz caloporteur, avec l'hydrogène produit en amont ou respectivement avec de l'hydrogène et du monoxyde de carbone produits en amont, le gaz caloporteur est choisi de préférence parmi le dioxyde de carbone (CO2), l'hydrogène (H₂), le monoxyde de carbone (CO), la vapeur d'eau (H2O) ou des mélanges de ceux-ci. On peut ainsi optimiser les débits et la réaction d'électrolyse ou de co-électrolyse de vapeur d'eau avec un mélange dédié.

Egalement pour une application en EHT, lorsqu'on cherche à mélanger le gaz caloporteur avec l'oxygène produit en amont et le gaz drainant, le gaz caloporteur est choisi de préférence parmi l'air, l'oxygène (O₂) ou un mélange de ceux-ci. On peut ainsi augmenter le débit de gaz drainant et de manière plus générale améliorer l'évacuation de l'oxygène produit ou limiter le taux d'oxygène dans le gaz de sortie pour des questions de sécurité par exemple.

Pour une application en pile SOFC, lorsqu'on cherche à mélanger le gaz caloporteur avec l'air et/ou de l'oxygène (O₂) provenant de l'amont, le gaz caloporteur est choisi de préférence parmi l'air, l'air non appauvri en oxygène, l'oxygène ou des mélanges de ceux-ci.

Egalement pour une application en pile SOFC, lorsqu'on cherche à mélanger le gaz caloporteur avec l'eau produite en amont et le cas échéant le combustible, étant choisi parmi l'hydrogène, la vapeur d'eau (H₂O), le dioxyde de carbone (CO₂), le méthane (CH₄), le monoxyde de carbone (CO) ou des mélanges de ceux-ci. On peut ainsi optimiser les débits et la consommation du combustible.

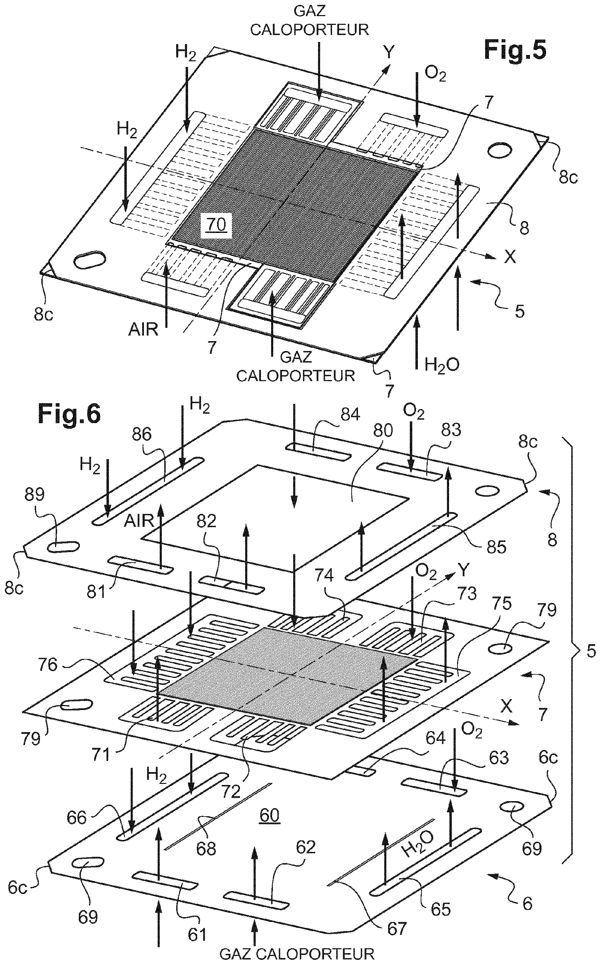

Les figures 5 et 6 montrent un interconnecteur 5 selon l'invention avec ces trois tôles 6 à 8 le constituant assemblées et stratifiées. Cet interconnecteur 5 permet de s'assurer par des circuits distincts la distribution et l'alimentation simultanées de vapeur d'eau H2O, du gaz drainant, et du gaz caloporteur depuis l'entrée du réacteur ainsi que la récupération respectivement de l'hydrogène et l'oxygène O2, produits au sein de l'empilement d'un réacteur d'électrolyse et du gaz caloporteur ayant servi à gérer le régime thermique. Comme détaillé par la suite, l'interconnecteur 5 permet d'assurer une circulation du gaz (H2O/H2) aux cathodes des cellules à courant croisé à 90° avec la circulation du gaz récupéré (O2, le cas échéant avec du gaz drainant) aux anodes des cellules et avec la circulation du gaz caloporteur au sein de l'interconnecteur.

L'interconnecteur 5 est constitué de trois tôles 6, 7, 8 allongées selon deux axes de symétrie (X, Y) orthogonaux entre eux, les tôles étant stratifiées et assemblées entre elles par soudure. Une tôle centrale 7 est intercalée entre une première 6 et une deuxième 8 tôle d'extrémité.

Les deux tôles d'extrémité 6 et 8 sont planes, tous les reliefs d'emboutis permettant la circulation des fluides aux anodes des cellules ainsi que tous les reliefs d'emboutis permettant la circulation du gaz caloporteur étant réalisés uniquement sur la tôle centrale 7.

La première tôle plane d'extrémité 6 est destinée à venir en contact mécanique avec le plan d'une cathode 2.2 d'une cellule (C2) d'électrolyse élémentaire et la tôle centrale emboutie 7,dépassant en hauteur la tôle plane d'extrémité 8, est destinée à venir en contact mécanique avec le plan d'une anode 4.1 d'une cellule (C1) d'électrolyse élémentaire adjacente, chacune des deux cellules d'électrolyse élémentaires adjacentes (C1, C2) de type SOEC étant formée d'une cathode 2.1, 2.2, d'une anode 4.1, 4.2 et d'un électrolyte 3.1, 3.2 intercalé entre la cathode et l'anode.

On décrit maintenant en référence aux figures 5 à 9, le mode de réalisation des tôles 6, 7, 8 de l'interconnecteur 5 dédié à l'électrolyse de la vapeur d'eau et leur assemblage pour mettre en œuvre le procédé d'électrolyse avec échange thermique par le gaz caloporteur selon l'invention.

La tôle centrale 7 comporte une partie centrale 70 emboutie définissant des emboutis 700, et est percée à la périphérie de sa partie centrale, d'au moins six lumières 71, 72, 73, 74, 75 et 76.

L'une des tôles planes d'extrémité 6 comporte une partie centrale plane 60 et, est percée, à la périphérie de sa partie centrale, d'au moins six lumières 61, 62, 63, 64, 65, 66. La première 6 tôle d'extrémité comporte en outre de deux fentes 67 ,68 lumières agencées symétriquement de part et d'autre de l'axe Y, à l'intérieur de ses premières à quatrième lumières 61 à 64, et sont allongées sur une longueur correspondant sensiblement à la longueur de la partie centrale selon l'axe Y.

L'autre des tôles planes d'extrémité 8 comporte une partie centrale 80 évidée et est percée, à la périphérie de sa partie centrale, d'au moins six lumières 81, 82, 83, 84, 85, 86.

Les premières 61, 71, 81 à quatrième 64, 74, 84 lumières de chaque tôle sont allongées sur une longueur correspondant à une partie de la longueur de la partie centrale 60, 70, 80 selon l'un des axes X des tôles et sont réparties deux à deux de part et d'autre dudit axe X.

Les cinquième 65, 75, 85 et sixième 66, 76, 86 lumières sont allongées sur une longueur correspondant sensiblement à la longueur de la partie centrale 60, 70, 80 selon l'autre des axes Y.

Comme visible sur les figures 5 à 9, les première 71, deuxième 72, troisième 73, et quatrième 74 lumières de la tôle centrale 7 sont élargies par rapport respectivement aux première 61, 81, deuxième 62, 82, troisième 63, 83 et quatrième 64, 84 lumières de chaque tôle plane d'extrémité 6, 8.

De même, les cinquième 75 et sixième 76 lumières de la tôle centrale 7 sont élargies respectivement aux cinquième 65, 85, et sixième 66, 86 lumières de chaque tôle plane d'extrémité 6, 8.

Toutes les lumières élargies 71, 72, 73, 74, 75, 76 de la tôle centrale 7 comportent dans leur partie élargie, des languettes de tôles 710, 720, 730, 740 espacées les unes des autres en formant un peigne.

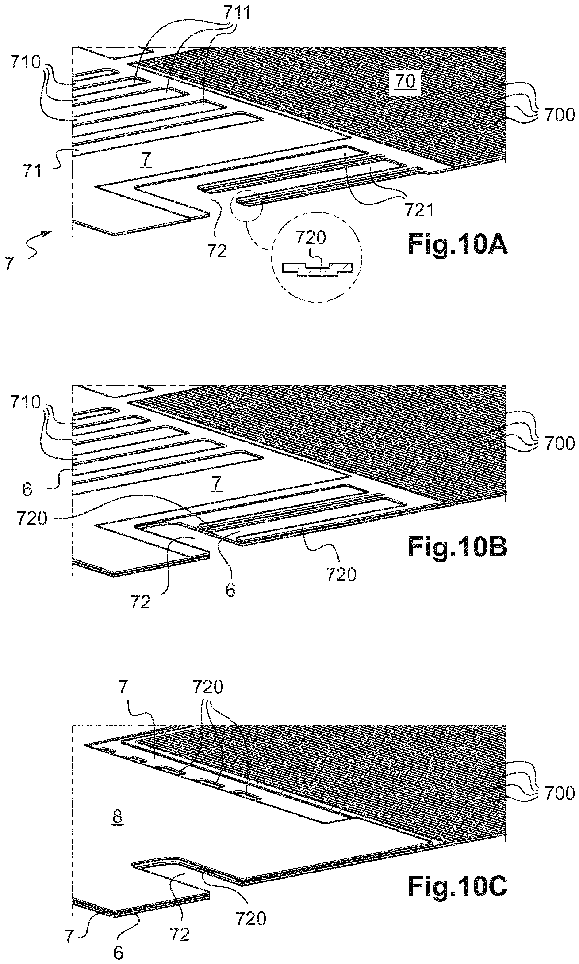

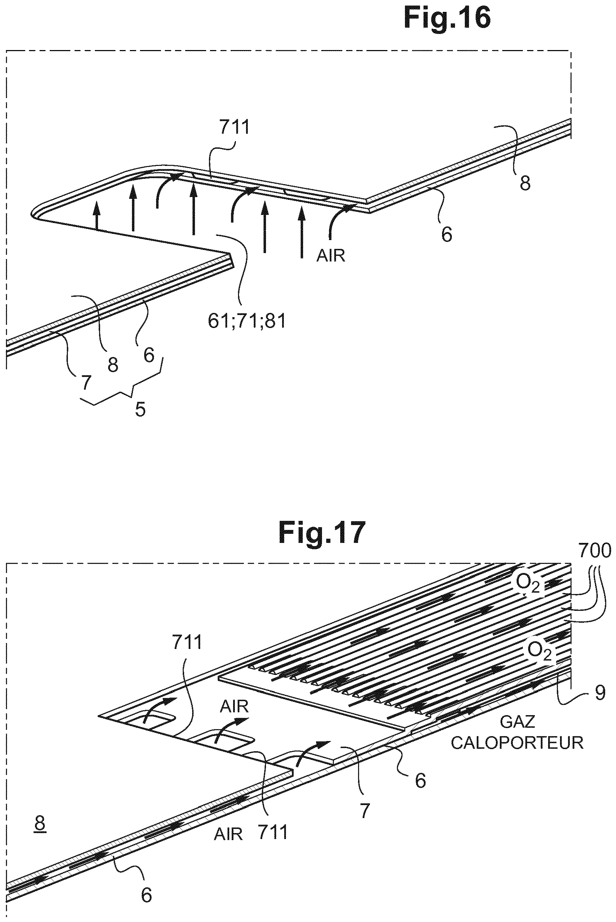

Comme illustré en figures 10C et 17, chacune des fentes 711 définie entre le bord d'une lumière élargie 71 et une languette 710 ou entre deux languettes consécutives débouche sur les canaux définis par les emboutis 700. Il en va de même pour les fentes réalisées du côté de la lumière élargie 73.

Comme montre en détail en figures 10A, 10B, 11, 12 et 13, les languettes 720 réalisées dans la lumière élargie 72 sont embouties en définissant à la fois une surface d'appui et un espacement entre les tôles d'extrémité 6 et 8 une fois la stratification et l'assemblage des trois tôles 6, 7 et 8 réalisés. Il en va de même avec les languettes réalisées dans la lumière élargie 74.

Pour chacune des fentes élargies 75, 76, les fentes entre languettes de tôle ainsi définies sont prévues pour déboucher sur une des lumières 65, 66 de la tôle plane d'extrémité 6 une fois la stratification et l'assemblage des trois tôles 6, 7 et 8 réalisés.

La stratification et l'assemblage des trois tôles 6, 7, 8 entre elles sont réalisés tels que:
- chacune des première à sixième lumières 61 à 66 de la tôle plane d'extrémité 6 est en communication fluidique individuellement respectivement avec l'une des première à sixième lumières 71 à 76 ; 81 à 86 correspondantes des deux autres tôles 7 et 8,
- la première 71 lumière de la tôle centrale 7 est en communication fluidique avec la troisième 73 lumière de la tôle centrale 7 par le biais des espaces 711 entre languettes 710 de la première 71 lumière, des canaux définis par les emboutis 700 et des espaces entre languettes 730 de la troisième 73 lumière de la tôle centrale 7,
- la deuxième 72 lumière de la tôle centrale 7 est en communication fluidique avec la quatrième 74 lumière de la tôle centrale 7 par le biais des espaces entre languettes 720 de la deuxième 72 lumière de la tôle centrale 7, de la chambre intérieure 9 délimitée entre les emboutis 700 et la partie centrale 60 plane de la tôle d'extrémité 6 et des espaces entre languettes 740 de la quatrième 74 lumière de la tôle centrale 7,
- la cinquième 65 et la sixième 66 lumière de la tôle d'extrémité 6 sont en communication fluidique avec l'une des fentes 67 et respectivement l'autre des fentes 68 de la première 6 tôle d'extrémité par le biais des espaces entre languettes de la cinquième 75 et respectivement la sixième 76 lumière de la tôle centrale 7.

Comme montré aux figures 10A à 13, le peigne formé 720, 721 permet au gaz caloporteur de passer de la clarinette d'alimentation 62, 72, 82 à la chambre 9 d'échange thermique en passant dans l'espace entre la tôle centrale 7 et la tôle d'extrémité 6. Les emboutis 720 des languettes leur confèrent une fonction d'entretoises et garantissent ainsi la hauteur du passage pour le gaz caloporteur dans la chambre 9 définie entre les tôles 6, 7. Un tel passage des gaz selon l'invention par l'intérieur de l'interconnecteur 5 permet ainsi d'assurer la circulation de gaz caloporteur dans un circuit distinct des circuits de circulation de la vapeur d'eau/hydrogène produit et du gaz drainant/oxygène récupéré.

De manière générale, toutes les formes de peignes pour les fentes élargies permettent une distribution homogène de chaque gaz (H₂O, Air, gaz caloporteur) sur la cellule d'électrolyse ou dans la chambre 9 d'échange thermique, et grâce à ces formes de peigne pour les fentes élargies une récupération du gaz produit (H2, O₂) ou du gaz caloporteur en sortie.

Les deux tôles planes 6 et 8 et la tôle centrale emboutie 7 constituant un interconnecteur 5 selon l'invention sont des tôles minces métalliques, percées et assemblées entre elles par soudures. De préférence, les tôles minces sont des tôles d'épaisseur inférieure à 3mm, typiquement de l'ordre de 0,2 mm. Toutes les soudures entre tôles réalisées à la fabrication, en dehors de tout fonctionnement de l'électrolyseur peuvent être réalisées avantageusement selon une technique de laser par transparence, ce qui est possible du fait de la faible épaisseur des tôles minces, typiquement de l'ordre de 0,2 mm.

Toutes les tôles sont avantageusement en acier ferritique avec de l'ordre de 20% de chrome, de préférence en CROFER® 22APU ou le FT18TNb, à base Nickel de type Inconel® 600 ou Haynes® dans des épaisseurs typiquement comprises entre 0,1 et 1 mm.

L'assemblage par lignes de soudures autour des lumières entre tôles 6, 7, 8 garantit une bonne étanchéité entre la vapeur d'eau amenée H₂0/l'air (gaz drainant)/ le gaz caloporteur et l'hydrogène H₂/l'oxygène produit et récupéré/le gaz caloporteur récupéré, lors du fonctionnement de l'électrolyseur.

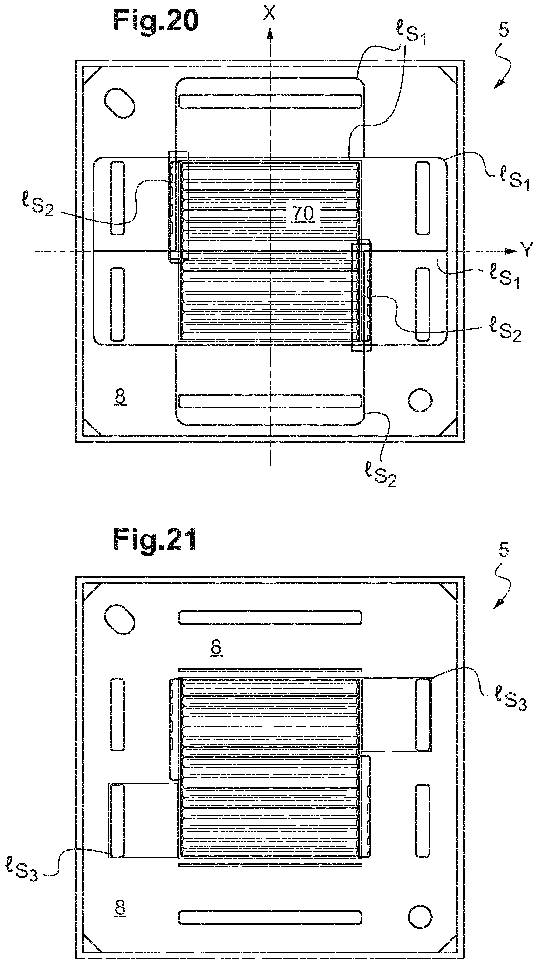

On a représenté en détail aux figures 20 à 24, les lignes de soudure qui ont été réalisées pour l'assemblage définitif des trois tôles 6, 7, 8, typiquement de 0,2 mm d'épaisseur chacune, afin de constituer un interconnecteur 5 selon l'invention.

On a distingué sur ces figures les lignes de soudure :
- ls₁ qui sont les lignes de soudure principales dans les zones où les trois tôles 6, 7, 8 sont présentes,
- ls₂ qui sont les lignes de soudure principales dans les zones où seules la tôle d'extrémité 6 et la tôle centrale 7 sont présentes,
- ls₁₂ qui sont les zones de jonction des lignes de soudure ls1 et ls2,
- ls₃ qui sont les lignes de soudure secondaires dans les zones où les trois tôles 6, 7, 8 sont présentes.

Tel qu'illustré sur l'ensemble des figures 5 à 9, les trois tôles 6, 7, 8 sont percées à leur périphérie de lumières supplémentaires 69, 79, 89 adaptées pour loger des tirants de fixation. Ces tirants de fixation permettent d'appliquer une force de maintien à l'empilement des différents composants du réacteur d'électrolyse.

Egalement tel qu'illustré sur l'ensemble des figures 5 à 9, les deux tôles planes d'extrémité 6 et 8, des angles 6c et 8c qui sont découpés afin de pouvoir placer de l'instrumentation de mesure, telle que des prises de potentiel ou thermocouples.

Différents modes de réalisation avantageux permettant l'injection de gaz caloporteur dans l'hydrogène ou l'oxygène produits en amont peuvent être mises en œuvre avec un interconnecteur selon l'invention.

Ces modes avantageux permettent de gérer le mélange du gaz caloporteur le long du trajet des gaz sur une cellule électrochimique, ce gaz caloporteur pouvant être avantageusement un des gaz réactifs. Ainsi, on obtient un mélange du gaz réactif avec le gaz déjà produit non pas en entrée de cellule mais dans une zone prédéterminée au sein de la cellule permettant d'optimiser ainsi au mieux la réaction d'électrolyse ou la réaction en pile à combustible.

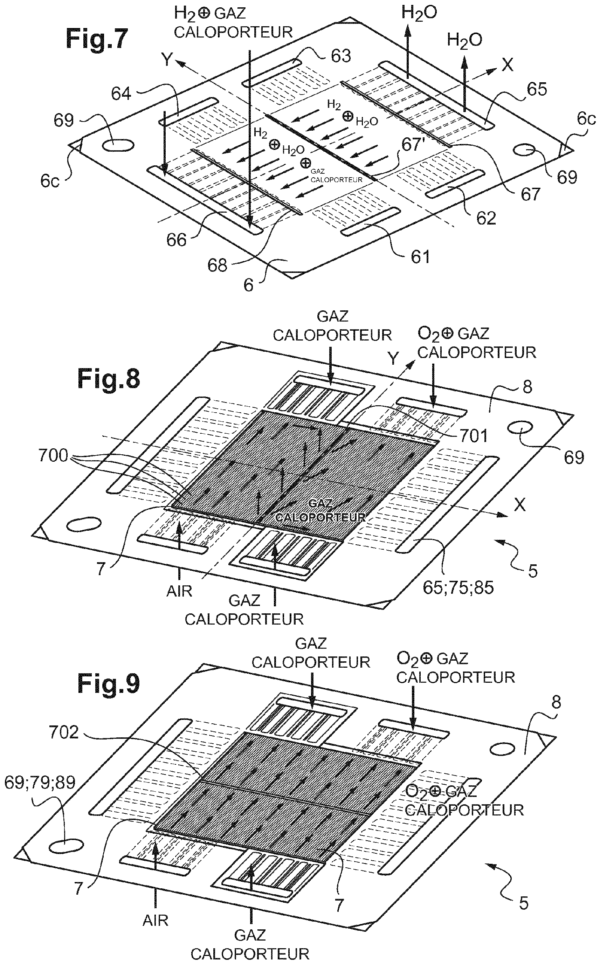

Un premier mode est illustré en figure 7 : la tôle plane d'extrémité 6 comporte en outre au moins une troisième fente 67' allongée sur une longueur correspondant sensiblement à la longueur de la partie centrale 60 selon l'axe Y. Cette(ces) fente(s) 67' est (sont) agencée(s) entre les deux autres fentes 67, 68 de la première tôle d'extrémité 6. L'assemblage des tôles est réalisé de sorte que cette troisième fente allongée 67' soit en communication fluidique avec la chambre intérieure 9. Cette fente 67', centrale dans l'exemple illustré, permet donc l'injection du gaz caloporteur et donc son mélange avec l'hydrogène produit en amont. On peut prévoir une pluralité de fentes 67' parallèles entre elles entre les deux fentes 67 et 68 afin de répartir les zones de mélange et le débit afférent. L'injection du gaz caloporteur peut selon cette variante consister en un enrichissement en vapeur d'eau H₂O en monoxyde de carbone CO ou en dioxyde de carbone CO2 en co-électrolyse par exemple.

Un deuxième mode est illustré en figure 8 : la tôle centrale 7 comporte en outre une fente 701 réalisée le long d'un canal embouti 700, allongée sur une longueur correspondant sensiblement à la longueur de la partie centrale 70 selon l'axe Y. L'assemblage des tôles est réalisé de sorte que cette fente allongée 701 soit en communication fluidique avec la chambre intérieure 9. Cette fente 701, centrale dans l'exemple illustré, permet donc l'injection du gaz caloporteur et donc son mélange avec oxygène produit en amont. On peut prévoir une pluralité de fentes 701 parallèles entre elles, réalisées chacune au fond d'un canal embouti 700, afin de répartir les zones de mélange et le débit afférent. L'injection du gaz caloporteur peut selon cette variante consister en un enrichissement en O₂ par exemple en pile à combustible SOFC.

Un troisième mode est illustré en figure 9: la tôle centrale 7 comporte en outre une fente 702, réalisée transversalement à l'ensemble des canaux emboutis 700, allongée sur une longueur correspondant sensiblement à la longueur de la partie centrale 70, selon l'axe X. L'assemblage des tôles est réalisé de sorte que cette fente allongée 702 soit en communication fluidique avec la chambre intérieure 9. Cette fente 702, centrale dans l'exemple illustré, permet donc l'injection du gaz caloporteur et donc son mélange avec oxygène produit en amont. On peut prévoir une pluralité de fentes 702 parallèles entre elles, réaliser chacune transversalement aux canaux emboutis 700, afin de répartir les zones de mélange et le débit afférent. L'injection du gaz caloporteur peut selon cette variante consister en un enrichissement en O₂ par exemple en pile à combustible SOFC.

Ainsi, la ou les fentes 67' sont destinées à mettre en communication le fluide caloporteur avec la cathode alors que les fentes 701 et 702 sont destinées à mettre en communication le fluide caloporteur avec l'anode.

On décrit maintenant en référence aux figures 4 à 19, le procédé de fonctionnement d'un réacteur d'électrolyse selon l'invention tel qu'il vient d'être décrit:
- on alimente les premières 61, 71, 81 lumières en gaz drainant, tel que de l'air, et simultanément les deuxièmes 62, 72, 82 lumières en un gaz caloporteur apte à évacuer ou amener de la chaleur,
- on alimente les cinquièmes 65, 75, 85 lumières en vapeur d'eau,
- on récupère l'hydrogène produit par l'électrolyse de la vapeur d'eau, dans les sixièmes 66, 76, 86 lumières et simultanément le gaz caloporteur dans les quatrièmes 64, 74, 84 lumières et simultanément l'oxygène produit par l'électrolyse de la vapeur d'eau et le cas échéant par la co-électrolyse, dans les troisièmes 63, 73, 83 lumières.

Selon une première variante, lorsqu'on injecte le gaz caloporteur par la troisième fente 67' de la tôle d'extrémité 6, on récupère dans la lumière 66, le gaz produit par la co-électrolyse de la vapeur d'eau et du gaz caloporteur réactif.

Selon une deuxième ou une troisième variante, lorsqu'on injecte le gaz caloporteur par la fente 701 ou la fente 702 de la tôle centrale 7, on récupère dans la lumière 63, l'oxygène O₂, éventuellement enrichi par le gaz caloporteur.

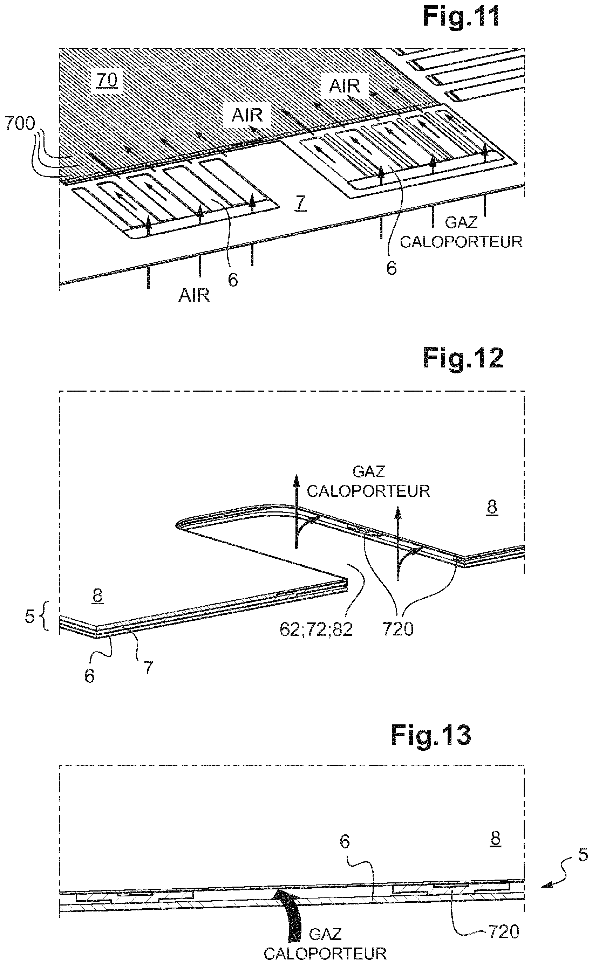

Le parcours du gaz caloporteur injecté à l'alimentation au sein d'un interconnecteur 5 est schématisé plus précisément en figures 11 à 15.

Le parcours de l'air en tant que gaz drainant injecté au sein d'un interconnecteur 5 est schématisé plus précisément en figures 16 et 17.

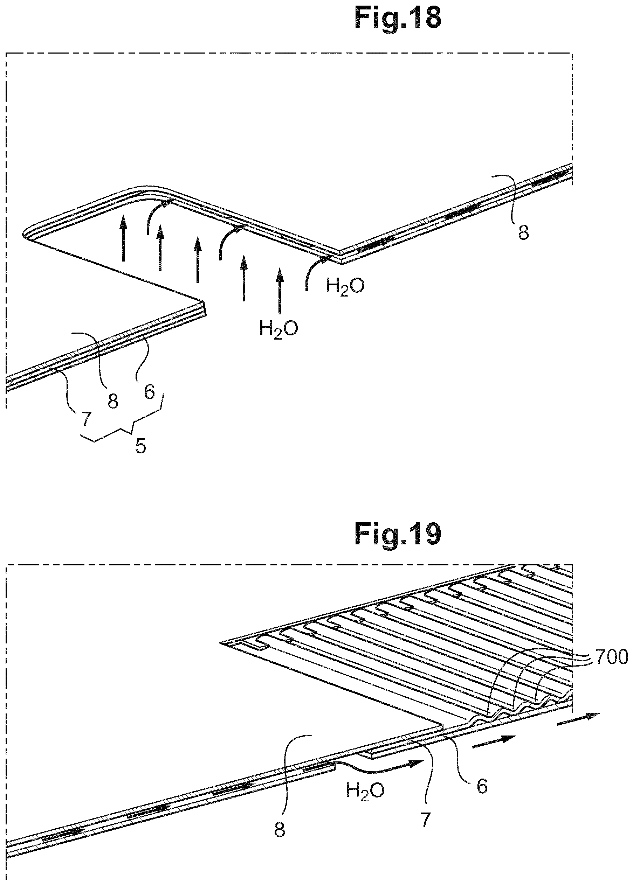

Le parcours de la vapeur d'eau injectée au sein d'un interconnecteur 5 est schématisé plus précisément en figures 18 et 19.
- Bien que non illustré, lorsque le gaz caloporteur, apte à évacuer de la chaleur, est en outre un combustible, un procédé de fonctionnement d'une pile à combustible intégrant des interconnecteurs 5 selon l'invention décrit précédemment comporte quant à lui les étapes suivantes :
- on alimente les premières 61, 71, 81 lumières en air et/ou en oxygène, et simultanément les deuxièmes 62, 72, 82 lumières en le gaz caloporteur,
- on alimente les cinquièmes 65, 75, 85 lumières en combustible,
- on récupère l'eau produite, et le cas échéant, le combustible en surplus et le cas échéant, le gaz caloporteur introduit par la troisième fente 67' de la tôle d'extrémité 6, dans les sixièmes 66, 76, 86 lumières et simultanément le gaz caloporteur dans les quatrièmes 64, 74, 84 lumières et simultanément l'air et/ou l'oxygène, dans les troisièmes 63, 73, 83 lumières.

Lorsque le gaz caloporteur, apte à évacuer de la chaleur, est en outre un comburant, alors les étapes sont les suivantes :
- on alimente les premières 61, 71, 81 lumières en air et/ou en oxygène, et simultanément les deuxièmes 62, 72, 82 lumières avec le gaz caloporteur,
- on alimente les cinquièmes 65, 75, 85 lumières en combustible,
- on récupère l'eau produite, et le cas échéant, le combustible en surplus et le cas échéant, le gaz caloporteur introduit par la (les) fente(s) 701, 702 de la tôle centrale 7, dans les sixièmes 66, 76, 86 lumières et simultanément le gaz caloporteur dans les quatrièmes 64, 74, 84 lumières et simultanément l'air et/ou l'oxygène, dans les troisièmes 63, 73, 83 lumières.

L'invention n'est pas limitée aux exemples qui viennent d'être décrits; on peut notamment combiner entre elles des caractéristiques des exemples illustrés au sein de variantes non illustrées dans le cadre défini par les revendications.

Ainsi, le procédé d'électrolyse à haute température avec échangeur intégré selon l'invention peut également être mis en œuvre pour réaliser l'électrolyse haute température du dioxyde d'azote (NO₂).

## Revendications

1. Interconnecteur électrique et fluidique pour l'électrolyse à haute température de la vapeur d'eau (EHT) ou pour la co-électrolyse à haute température avec le dioxyde de carbone CO₂, ou une pile à combustible SOFC, l'interconnecteur consistant en trois tôles (6, 7, 8), allongées selon deux axes de symétrie (X, Y) orthogonaux entre eux, l'une des tôles d'extrémité étant destinée à venir en contact mécanique avec le plan d'une cathode d'une cellule électrochimique élémentaire et une autre des tôles étant destinée à venir en contact mécanique avec le plan d'une anode d'une cellule électrochimique élémentaire adjacente, chacune des deux cellules d'électrochimiques élémentaires adjacentes de type SOEC étant formée d'une cathode, d'une anode, et d'un électrolyte intercalé entre la cathode et l'anode, dispositif dans lequel :
- l'une (7) des trois tôles (6, 7, 8), dite tôle centrale, comporte une partie centrale (70) emboutie comportant des emboutis (700) définissant des canaux et, est percée, à la périphérie de sa partie centrale, d'au moins six lumières (71, 72, 73, 74, 75, 76), les premières à quatrième lumières (71 à 74) étant allongées chacune sur une longueur correspondant à une partie de la longueur de la partie centrale selon l'un des axes X et étant réparties deux à deux de part et d'autre dudit axe X, tandis que les cinquième et sixième lumières (75, 76) sont allongées chacune sur une longueur correspondant sensiblement à la longueur de la partie centrale selon l'autre des axes Y,
- une (6) des tôles d'extrémité, dite première tôle d'extrémité, étant une tôle plane comportant une partie centrale (60) et, la première tôle d'extrémité étant percée, à la périphérie de sa partie centrale, d'au moins six lumières (61, 62, 63, 64, 65, 66), les premières à quatrième lumières (61 à 64) étant allongées chacune sur une longueur correspondant à une partie de la longueur de la partie centrale de la première tôle d'extrémité selon l'un des axes X et étant réparties deux à deux de part et d'autre dudit axe X, tandis que les cinquième et sixième lumières (65, 66) sont allongées chacune sur une longueur correspondant sensiblement à la longueur de la partie centrale de la première tôle d'extrémité selon l'autre des axes Y, la partie centrale (60) étant percée d'au moins deux fentes (67, 68) allongées chacune sur une longueur correspondant sensiblement à la longueur de la partie centrale de la première tôle d'extrémité selon l'autre des axes Y,
- l'autre (8) des tôles d'extrémité, dite deuxième tôle d'extrémité, étant une tôle plane comportant une partie centrale (80) évidée et est percée, à la périphérie de sa partie centrale, d'au moins six lumières (81, 82, 83, 84, 85, 86), les premières à quatrième lumières (81 à 84) étant allongées chacune sur une longueur correspondant à une partie de la longueur de la partie centrale de la deuxième tôle d'extrémité selon l'un des axes X et étant réparties deux à deux de part et d'autre dudit axe X, tandis que les cinquième et sixième lumières (85, 86) sont allongées chacune sur une longueur correspondant sensiblement à la longueur de la partie centrale de la deuxième tôle d'extrémité selon l'autre des axes Y,
- les six lumières (71, 72, 73, 74, 75, 76) de la tôle centrale (7) comportent chacune, des languettes de tôles (710, 720...) espacées les unes des autres en formant un peigne, chacune des fentes (711, 721), définie entre le bord d'une des lumières (71 à 76) et une languette (710, 720) ou entre deux languettes consécutives,
- les trois tôles (6, 7, 8) sont stratifiées et assemblées entre elles telles que:
• chacune des première à sixième lumières (61 à 66) de l'une des trois tôles est en communication fluidique individuellement respectivement avec l'une des première à sixième lumières (71 à 76 ; 81 à 86) correspondantes des deux autres tôles,
• la première (71) lumière de la tôle centrale (7) est en communication fluidique avec la troisième (73) lumière de la tôle centrale (7) par le biais des espaces (711) entre languettes (710) de la première (71) lumière, des canaux définis par les emboutis (700) et des espaces entre languettes (730) de la troisième (73) lumière de la tôle centrale (7),
• la deuxième (72) lumière de la tôle centrale (7) est en communication fluidique avec la quatrième (74) lumière de la tôle centrale (7) par le biais des espaces entre languettes (720) de la deuxième (72) lumière de la tôle centrale (7), de la chambre intérieure (9) délimitée entre les emboutis (700) et la partie centrale (60) plane de la première tôle d'extrémité (6) et des espaces entre languettes (740) de la quatrième (74) lumière de la tôle centrale (7),
• la cinquième (65) et la sixième (66) lumière de la première (6) tôle d'extrémité sont en communication fluidique avec l'une des fentes (66) et respectivement l'autre des fentes (67) de la première (6) tôle d'extrémité par le biais des espaces entre languettes de la cinquième (75) et respectivement la sixième (76) lumière de la tôle centrale (7).

2. Interconnecteur électrique et fluidique selon la revendication 1, dans lequel :
- la première (6) tôle d'extrémité comporte en outre une ou plusieurs troisième fente(s) (67') allongée(s) sur une longueur correspondant sensiblement à la longueur de la partie centrale selon l'autre des axes Y, la(les) troisième(s) fente(s) (67') étant agencée(s) entre les deux autres fentes (67, 68) de la première tôle d'extrémité (6),
- les trois tôles sont assemblées entre elles telles que la(les) troisième(s) fente(s) allongée(s) (67') de la première (6) tôle d'extrémité est (sont) en communication fluidique avec la chambre intérieure (9).

3. Interconnecteur électrique et fluidique selon la revendication 1 ou 2, dans lequel :
- la tôle centrale (7) comporte en outre une ou plusieurs fente(s) (701) allongée(s) sur une longueur correspondant sensiblement à la longueur de la partie centrale selon l'autre Y des axes, la(les) fente(s) (701) étant agencée(s) le long d'un canal embouti (700),
- les trois tôles sont assemblées entre elles telles que la(les) fente(s) allongée(s) (701) de la tôle centrale (7) est (sont) en communication fluidique avec la chambre intérieure (9).

4. Interconnecteur électrique et fluidique selon l'une des revendications 1 à 3, dans lequel :
- la tôle centrale (7) comporte en outre une ou plusieurs fente(s) (702) allongée(s) sur une longueur correspondant sensiblement à la longueur de la partie centrale selon l'autre Y des axes, la(les) fente(s) (701) étant agencée(s) transversalement aux canaux emboutis (700),
- les trois tôles sont assemblées entre elles telles que la(les) fente(s) allongée(s) (702) de la tôle centrale (7) est (sont) en communication fluidique avec la chambre intérieure (9).

5. Réacteur d'électrolyse ou de co-électrolyse comportant un empilement de cellules électrochimiques (C1, C2, C3) élémentaires à oxydes solides formées chacune d'une cathode (2.1, 2.2..), d'une anode (4.1, 4.2) et d'un électrolyte (3.1, 3.2) intercalé entre la cathode et l'anode, et une pluralité d'interconnecteurs (5) électrique et fluidique selon l'une des revendications précédentes, agencés chacun entre deux cellules élémentaires adjacentes avec la première (6) tôle d'extrémité en contact électrique avec la cathode (2.1) de l'une des deux cellules (C1) élémentaires et les emboutis (700) de la tôle centrale (7) avec l'anode (4.2) de l'autre (C2) des deux cellules élémentaires.

6. Procédé de fonctionnement d'un réacteur d'électrolyse selon la revendication 5 lorsqu'elle dépend de la revendication 2, selon lequel :
- on alimente les premières (61, 71, 81) lumières en gaz drainant, tel que de l'air et/ou de l'oxygène (O2), et simultanément les deuxièmes (62, 72, 82) lumières en un gaz caloporteur apte à évacuer ou amener de la chaleur, le gaz caloporteur étant neutre chimiquement vis-à-vis de l'hydrogène,
- on alimente les cinquièmes (65, 75, 85) lumières en vapeur d'eau et/ou en hydrogène,
- on récupère l'hydrogène produit par l'électrolyse de la vapeur d'eau, et le cas échéant, le gaz produit par la co-électrolyse de la vapeur d'eau et du gaz caloporteur introduit par la (les) troisième(s) fente(s) (67') de la première tôle d'extrémité (6), dans les sixièmes (66, 76, 86) lumières et simultanément le gaz caloporteur dans les quatrièmes (64, 74, 84) lumières et simultanément l'oxygène produit par l'électrolyse de la vapeur d'eau et le cas échéant par la co-électrolyse, dans les troisièmes (63, 73, 83) lumières.

7. Procédé de fonctionnement d'un réacteur d'électrolyse selon la revendication 5 lorsqu'elle dépend des revendication 3 et/ou 4, selon lequel :
- on alimente les premières (61, 71, 81) lumières en gaz drainant, tel que de l'air et/ou de l'oxygène (O2), et simultanément les deuxièmes (62, 72, 82) lumières en un gaz caloporteur apte à évacuer ou amener de la chaleur, le gaz caloporteur étant neutre chimiquement vis-à-vis de l'oxygène,
- on alimente les cinquièmes (65, 75, 85) lumières en vapeur d'eau et/ou en hydrogène,
- on récupère l'hydrogène produit par l'électrolyse de la vapeur d'eau, et le cas échéant, le gaz produit par la co-électrolyse de la vapeur d'eau et du gaz caloporteur introduit par la (les) fente(s) allongées (701, 702) de la tôle centrale (7), dans les sixièmes (66, 76, 86) lumières et simultanément le gaz caloporteur dans les quatrièmes (64, 74, 84) lumières et simultanément l'oxygène produit par l'électrolyse de la vapeur d'eau et le cas échéant par la co-électrolyse, dans les troisièmes (63, 73, 83) lumières.

8. Procédé de fonctionnement d'un réacteur d'électrolyse selon la revendication 6 ou 7, le gaz caloporteur introduit par la(les) troisième fente(s), mélangé avec l'hydrogène produit en amont ou respectivement avec de l'hydrogène et du monoxyde de carbone produits en amont, étant choisi parmi le dioxyde de carbone (CO₂), l'hydrogène (H2), le monoxyde de carbone (CO), le méthane (CH₄), la vapeur d'eau (H₂O) ou des mélanges de ceux-ci,

9. Procédé de fonctionnement d'un réacteur d'électrolyse selon l'une des revendications 6 à 8, selon lequel on définit un régime de fonctionnement en mode exothermique pour l'électrolyse ou respectivement la co-électrolyse de la vapeur d'eau aux cathodes des cellules élémentaires, la chaleur dégagée par l'électrolyse ou respectivement la co-électrolyse étant évacuée par le gaz caloporteur.

10. Procédé de fonctionnement d'un réacteur d'électrolyse selon l'une des revendications 6 à 8, selon lequel on définit un régime de fonctionnement en mode endothermique pour l'électrolyse ou respectivement la co-électrolyse de la vapeur d'eau aux cathodes des cellules élémentaires, la chaleur absorbée par l'électrolyse ou respectivement la co-électrolyse étant apportée par le gaz caloporteur.

11. Pile à combustible (SOFC) comportant un empilement de cellules électrochimiques (C1, C2, C3) élémentaires à oxydes solides formées chacune d'une anode (2.1, 2.2..), d'une cathode (4.1, 4.2) et d'un électrolyte (3.1, 3.2) intercalé entre la cathode et l'anode, et une pluralité d'interconnecteurs (5) électrique et fluidique selon l'une des revendications 1 à 4, agencés chacun entre deux cellules élémentaires adjacentes avec la première (6) tôle d'extrémité en contact électrique avec l'anode (2.1) de l'une des deux cellules (C1) élémentaires et les emboutis (700) de la tôle centrale (7) avec la cathode (4.2) de l'autre (C2) des deux cellules élémentaires.

12. Procédé de fonctionnement d'une pile à combustible (SOFC), selon la revendication 11 lorsqu'elle dépend de la revendication 2, selon lequel :
- on alimente les premières (61, 71, 81) lumières en air et/ou en oxygène, et simultanément les deuxièmes (62, 72, 82) lumières en un gaz caloporteur apte à évacuer de la chaleur, le gaz caloporteur étant en outre un combustible,
- on alimente les cinquièmes (65, 75, 85) lumières en combustible,
- on récupère l'eau produite, et le cas échéant, le combustible en surplus et le cas échéant, le gaz caloporteur introduit par la (les) troisième (s) fente(s) (67') de la tôle d'extrémité (6), dans les sixièmes (66, 76, 86) lumières et simultanément le gaz caloporteur dans les quatrièmes (64, 74, 84) lumières et simultanément l'air et/ou l'oxygène, dans les troisièmes (63, 73, 83) lumières.

13. Procédé de fonctionnement d'une pile à combustible (SOFC), selon la revendication 11 lorsqu'elle dépend des revendications 3 et/ou 4, selon lequel :
- on alimente les premières (61, 71, 81) lumières en air et/ou en oxygène, et simultanément les deuxièmes (62, 72, 82) lumières en un gaz caloporteur apte à évacuer de la chaleur, le gaz caloporteur étant en outre un comburant,
- on alimente les cinquièmes (65, 75, 85) lumières en combustible,
- on récupère l'eau produite, et le cas échéant, le combustible en surplus et le cas échéant, le gaz caloporteur introduit par la (les) fente(s) (701, 702) de la tôle centrale (7), dans les sixièmes (66, 76, 86) lumières et simultanément le gaz caloporteur dans les quatrièmes (64, 74, 84) lumières et simultanément l'air et/ou l'oxygène, dans les troisièmes (63, 73, 83) lumières.

14. Procédé de fonctionnement selon la revendication 12 ou 13, le gaz caloporteur introduit par la(les) troisième fente(s) ou par la(les) fente(s) (701, 702) de la tôle centrale (7), mélangé avec l'eau et/ou le dioxyde de carbone (CO₂) produit(s) en amont et le cas échéant le combustible en surplus dans une première zone en amont de la sortie du réacteur, étant choisi parmi l'hydrogène (H2), la vapeur d'eau (H2O), le dioxyde de carbone (CO2), le méthane (CH4), le monoxyde de carbone (CO) ou des mélanges de ceux-ci.

15. Procédé de fonctionnement selon la revendication 12 ou 13, le gaz caloporteur introduit par la(les) troisième fente(s) ou par la(les) fente(s) (701, 702) de la tôle centrale (7), mélangé avec l'air et/ou de l'oxygène (O₂) provenant de l'amont dans une deuxième zone en amont de la sortie de réacteur, étant choisi parmi l'air, l'air non appauvri en oxygène, l'oxygène ou des mélanges de ceux-ci.

## Patentansprüche

1. Elektrischer und fluidischer Interkonnektor für die Wasserdampf-Hochtemperaturelektrolyse (HTE) oder für die Hochtemperatur-Coelektrolyse mit Kohlendioxid CO₂ oder eine SOFC Brennstoffzelle, wobei der Interkonnektor aus drei Blechen (6, 7, 8) besteht, die entlang von zwei senkrecht zueinander verlaufenden Symmetrieachsen (X, Y) langgestreckt sind, wobei eines der endständigen Bleche dazu bestimmt ist, mit der Ebene einer Kathode einer elementaren elektrochemischen Zelle in mechanischen Kontakt zu gelangen, und ein weiteres der Bleche dazu bestimmt ist, mit der Ebene einer Anode einer benachbarten elementaren elektrochemischen Zelle in mechanischen Kontakt zu gelangen, wobei jede der beiden benachbarten elementaren elektrochemischen Zellen vom SOEC-Typ aus einer Kathode, einer Anode und einem zwischen der Kathode und der Anode eingefügten Elektrolyten gebildet wird, in welcher Vorrichtung:
- eines (7) der drei Bleche (6, 7, 8), zentrales Blech genannt, einen tiefgezogenen zentralen Teil (70) umfasst, der Tiefziehelemente (700) umfasst, die Kanäle definieren, und am Umfang seines zentralen Teils von mindestens sechs Schlitzen (71, 72, 73, 74, 75, 76) durchbrochen ist, wobei die ersten bis vierten Schlitze (71 bis 74) jeweils über eine Länge langgestreckt sind, die einem Teil der Länge des zentralen Teils entlang einer der Achsen X entspricht und paarweise beidseits dieser Achse X verteilt sind, während die fünften und sechsten Schlitze (75, 76) jeweils über eine Länge langgestreckt sind, die im Wesentlichen der Länge des zentralen Teils entlang der anderen der Achsen Y entspricht,
- eines (6) der endständigen Bleche, erstes endständiges Blech genannt, ein ebenes Blech ist, das einen zentralen Teil (60) umfasst, wobei das erste endständige Blech am Umfang seines zentralen Teils von mindestens sechs Schlitzen (61, 62, 63, 64, 65, 66) durchbrochen ist, wobei die ersten bis vierten Schlitze (61 bis 64) jeweils über eine Länge langgestreckt sind, die einem Teil der Länge des zentralen Teils des ersten endständigen Blechs entlang der einen der Achsen X entspricht, und paarweise beidseits der Achse X verteilt sind, während die fünften und sechsten Schlitze (65, 66) jeweils über eine Länge langgestreckt sind, die im Wesentlichen der Länge des zentralen Teils des ersten endständigen Blechs entlang der anderen der Achsen Y entspricht, wobei der zentrale Teil (60) von mindestens zwei Spalten (67, 68) durchbrochen ist, die jeweils über eine Länge langgestreckt sind, die im Wesentlichen der Länge des zentralen Teils des ersten endständigen Blechs entlang der anderen der Achsen Y entspricht,
- das andere (8) der endständigen Bleche, zweites endständiges Blech genannt, ein ebenes Blech ist, das einen zentralen ausgesparten Teil (80) umfasst und am Umfang seines zentralen Teils von mindestens sechs Schlitzen (81, 82, 83, 84, 85, 86) durchbrochen ist, wobei die ersten bis vierten Schlitze (81 bis 84) jeweils über eine Länge langgestreckt sind, die einem Teil der Länge des zentralen Teils des zweiten endständigen Blechs entlang einer der Achsen X entspricht und paarweise beidseits der Achse X verteilt sind, während die fünften und sechsten Schlitze (85, 86) jeweils über eine Länge langgestreckt sind, die im Wesentlichen der Länge des zentralen Teils des zweiten endständigen Blechs entlang der anderen der Achsen Y entspricht,
- die sechs Schlitze (71, 72, 73, 74, 75, 76) des zentralen Blechs (7) jeweils Blechzungen (710, 720...) umfassen, die voneinander beabstandet sind und dabei einen Kamm bilden, wobei jeder der Spalte (711, 721) zwischen dem Rand eines der Schlitze (71 bis 76) und einer Zunge (710, 720) oder zwischen zwei aufeinander folgenden Zungen definiert ist,
- die drei Bleche (6, 7, 8) so geschichtet und zusammengefügt sind, dass:
• jeder der ersten bis sechsten Schlitze (61 bis 66) des einen der drei Bleche jeweils einzeln mit einem der entsprechenden ersten bis sechsten Schlitze (71 bis 76; 81 bis 86) der beiden anderen Bleche in Fluidverbindung steht,
• der erste (71) Schlitz des zentralen Blechs (7) mit dem dritten (73) Schlitz des zentralen Blechs (7) auf dem Umweg über Zwischenräume (711) zwischen Zungen (710) des ersten (71) Schlitzes, durch die Tiefziehelemente (700) definierte Kanäle und Zwischenräume zwischen Zungen (730) des dritten (73) Schlitzes des zentralen Blechs (7) in Fluidverbindung steht,
• der zweite (72) Schlitz des zentralen Blechs (7) mit dem vierten (74) Schlitz des zentralen Blechs (7) auf dem Umweg über Zwischenräume zwischen Zungen (720) des zweiten (72) Schlitzes des zentralen Blechs (7), die innere Kammer (9), die zwischen den Tiefziehelementen (700) und dem ebenen zentralen Teil (60) des ersten endständigen Blechs (6) begrenzt wird, und Zwischenräume zwischen Zungen (740) des vierten (74) Schlitzes des zentralen Blechs (7) in Fluidverbindung steht,
• der fünfte (65) und der sechste (66) Schlitz des ersten (6) endständigen Blechs mit einem der Schlitze (66) beziehungsweise mit dem anderen der Schlitze (67) des ersten (6) endständigen Blechs auf dem Umweg über Zwischenräume zwischen Zungen des fünften (75) beziehungsweise des sechsten (76) Schlitzes des zentralen Blechs (7) in Fluidverbindung stehen.

2. Elektrischer und fluidischer Interkonnektor nach Anspruch 1, bei dem:
- das erste (6) endständige Blech ferner einen oder mehrere dritte Spalte (67') umfasst, die über eine Länge langgestreckt sind, die im Wesentlichen der Länge des zentralen Teils entlang der anderen der Achsen Y entspricht, wobei der oder die dritten Spalte (67') zwischen den beiden anderen Spalten (67, 68) des ersten endständigen Blechs (6) angeordnet sind,
- die dritten Bleche so zusammengefügt sind, dass der oder die langgestreckten dritten Spalte (67') des ersten (6) endständigen Blechs mit der inneren Kammer (9) in Fluidverbindung stehen.

3. Elektrischer und fluidischer Interkonnektor nach Anspruch 1 oder 2, bei dem:
- das zentrale Blech (7) ferner einen oder mehrere Spalte (701) umfasst, die über eine Länge langgestreckt sind, die im Wesentlichen der Länge des zentralen Teils entlang der anderen der Achsen Y entspricht, wobei der oder die Spalte (701) entlang eines tiefgezogenen Kanals (700) angeordnet sind,
- die dritten Bleche so zusammengefügt sind, dass der oder die langgestreckten Spalte (701) des zentralen Blechs (7) mit der inneren Kammer (9) in Fluidverbindung stehen.

4. Elektrischer und fluidischer Interkonnektor nach einem der Ansprüche 1 bis 3, bei dem:
- das zentrale Blech (7) ferner einen oder mehrere Spalte (702) umfasst, die über eine Länge langgestreckt sind, die im Wesentlichen der Länge des zentralen Teils entlang der anderen der Achsen Y entspricht, wobei der oder die Spalte (701) quer zu den tiefgezogenen Kanälen (700) angeordnet sind,
- die dritten Bleche so zusammengefügt sind, dass der oder die langgestreckten Spalte (702) des zentralen Blechs (7) mit der inneren Kammer (9) in Fluidverbindung stehen.

5. Elektrolyse- oder Coelektrolysereaktor, umfassend einen Stapel aus elementaren elektrochemischen Festoxidzellen (C1, C2, C3), die jeweils aus einer Kathode (2.1, 2.2..), einer Anode (4.1, 4.2) und einem zwischen der Kathode und der Anode eingefügten Elektrolyten (3.1, 3.2) gebildet sind, und eine Mehrzahl von elektrischen und fluidischen Interkonnektoren (5) nach einem der vorhergehenden Ansprüche, die jeweils zwischen zwei benachbarten elementaren Zellen angeordnet sind, wobei das erste (6) endständige Blech mit der Kathode (2.1) der einen der beiden elementaren Zellen (C1) und die Tiefziehelemente (700) des zentralen Blechs (7) mit der Anode (4.2) der anderen (C2) der beiden elementaren Zellen in elektrischem Kontakt stehen.

6. Verfahren zum Betreiben eines Elektrolysereaktors nach Anspruch 5, wenn er von Anspruch 2 abhängig ist, bei dem:
- den ersten (61, 71, 81) Schlitzen Trocknungsgas wie beispielsweise Luft und/oder Sauerstoff (O2) und gleichzeitig den zweiten (62, 72, 82) Schlitzen ein Wärmeträgergas zugeführt wird, das geeignet ist, Wärme abzuführen oder zuzuführen, wobei das Wärmeträgergas gegenüber dem Wasserstoff chemisch neutral ist,
- den fünften (65, 75, 85) Schlitzen Wasserdampf und/oder Wasserstoff zugeführt wird,
- der Wasserstoff, der durch die Elektrolyse des Wasserdampfs erzeugt wird, und gegebenenfalls das Gas, das durch die Coelektrolyse des Wasserdampfs und des Wärmeträgergases, das durch den oder die dritten Spalte (67') des ersten endständigen Blechs (6) eingeleitet wird, erzeugt wird, in den sechsten (66, 76, 86) Schlitzen und gleichzeitig das Wärmeträgergas in den vierten (64, 74, 84) Schlitzen und gleichzeitig der durch die Elektrolyse des Wasserdampfs und gegebenenfalls durch die Coelektrolyse erzeugte Sauerstoff in den dritten (63, 73, 83) Schlitzen zurückgewonnen wird.

7. Verfahren zum Betreiben eines Elektrolysereaktors nach Anspruch 5, wenn er von Anspruch 3 und/oder 4 abhängig ist, bei dem:
- den ersten (61, 71, 81) Schlitzen Trocknungsgas wie beispielsweise Luft und/oder Sauerstoff (O2) und gleichzeitig den zweiten (62, 72, 82) Schlitzen ein Wärmeträgergas zugeführt wird, das geeignet ist, Wärme abzuführen oder zuzuführen, wobei das Wärmeträgergas gegenüber dem Sauerstoff chemisch neutral ist,
- den fünften (65, 75, 85) Schlitzen Wasserdampf und/oder Wasserstoff zugeführt wird,
- der Wasserstoff, der durch die Elektrolyse des Wasserdampfs erzeugt wird, und gegebenenfalls das Gas, das durch die Coelektrolyse des Wasserdampfes und des Wärmeträgergases, das durch den oder die langgestreckten Spalte (701, 702) des zentralen Blechs (7) eingeleitet wird, erzeugt wird, in den sechsten (66, 76, 86) Schlitzen und gleichzeitig das Wärmeträgergas in den vierten (64, 74, 84) Schlitzen und gleichzeitig der Sauerstoff, der durch die Elektrolyse des Wasserdampfes und gegebenenfalls durch die Coelektrolyse erzeugt wird, in den dritten (63, 73, 83) Schlitzen zurückgewonnen wird.

8. Verfahren zum Betreiben eines Elektrolysereaktors nach Anspruch 6 oder 7, wobei das durch den oder die dritten Spalte eingeleitete Wärmeträgergas, gemischt mit dem stromauf erzeugten Wasserstoff beziehungsweise mit stromauf erzeugtem Wasserstoff und Kohlenmonoxid, unter Kohlendioxid (CO₂), Wasserstoff (H₂), Kohlenmonoxid (CO), Methan (CH₄), Wasserdampf (H₂O) oder Mischungen davon gewählt ist.

9. Verfahren zum Betreiben eines Elektrolysereaktors nach einem der Ansprüche 6 bis 8, bei dem eine exotherme Betriebsart für die Elektrolyse beziehungsweise die Coelektrolyse des Wasserdampfes an den Kathoden der elementaren Zellen definiert wird, wobei die durch die Elektrolyse beziehungsweise die Coelektrolyse freigesetzte Wärme vom Wärmeträgergas abgeführt wird.

10. Verfahren zum Betreiben eines Elektrolysereaktors nach einem der Ansprüche 6 bis 8, bei dem eine endotherme Betriebsart für die Elektrolyse beziehungsweise die Coelektrolyse des Wasserdampfes an den Kathoden der elementaren Zellen definiert wird, wobei die durch die Elektrolyse beziehungsweise die Coelektrolyse aufgenommene Wärme vom Wärmeträgergas zugeführt wird.

11. Brennstoffzelle (SOFC), umfassend einen Stapel von elementaren elektrochemischen Festoxidzellen (C1, C2, C3), die jeweils aus einer Anode (2.1, 2.2..), einer Kathode (4.1, 4.2) und einem zwischen der Kathode und der Anode eingefügten Elektrolyten (3.1, 3.2) gebildet sind, und eine Mehrzahl von elektrischen und fluidischen Interkonnektoren (5) nach einem der Ansprüche 1 bis 4, die jeweils zwischen zwei benachbarten elementaren Zellen angeordnet sind, wobei das erste (6) endständige Blech mit der Anode (2.1) der einen der beiden elementaren Zellen (C1) und die Tiefziehelemente (700) des zentralen Blechs (7) mit der Kathode (4.2) der anderen (C2) der beiden elementaren Zellen in elektrischem Kontakt stehen.

12. Verfahren zum Betreiben einer Brennstoffzelle (SOFC) nach Anspruch 11, wenn er von Anspruch 2 abhängig ist, bei dem:
- den ersten (61, 71, 81) Schlitzen Luft und/oder Sauerstoff und gleichzeitig den zweiten (62, 72, 82) Schlitzen ein Wärmeträgergas zugeführt wird, das geeignet ist, Wärme abzuführen, wobei das Wärmeträgergas ferner ein Brennstoff ist,
- den fünften (65, 75, 85) Schlitzen Brennstoff zugeführt wird,
- das erzeugte Wasser und gegebenenfalls der überschüssige Brennstoff und gegebenenfalls das durch den oder die dritten Spalte (67') des ersten endständiges Blechs (6) eingeleitete Wärmeträgergas in den sechsten (66, 76, 86) Schlitzen und gleichzeitig das Wärmeträgergas in den vierten (64, 74, 84) Schlitzen und gleichzeitig die Luft und/oder der Sauerstoff in den dritten (63, 73, 83) Schlitzen zurückgewonnen wird.

13. Verfahren zum Betreiben einer Brennstoffzelle (SOFC) nach Anspruch 11, wenn er von Anspruch 3 und/oder 4 abhängig ist, bei dem:
- den ersten (61, 71, 81) Schlitzen Luft und/oder Sauerstoff und gleichzeitig den zweiten (62, 72, 82) Schlitzen ein Wärmeträgergas zugeführt wird, das geeignet ist, Wärme abzuführen, wobei das Wärmeträgergas ferner ein Oxidationsmittel ist,
- den fünften (65, 75, 85) Schlitzen Brennstoff zugeführt wird,
- das erzeugte Wasser und gegebenenfalls der überschüssige Brennstoff und gegebenenfalls das durch den oder die Spalte (701, 702) des zentralen Blechs (7) eingeleitete Wärmeträgergas in den sechsten (66, 76, 86) Schlitzen und gleichzeitig das Wärmeträgergas in den vierten (64, 74, 84) Schlitzen und gleichzeitig die Luft und/oder der Sauerstoff in den dritten (63, 73, 83) Schlitzen zurückgewonnen wird.

14. Betriebsverfahren nach Anspruch 12 oder 13, wobei das durch den oder die dritte Spalte oder durch den oder die Spalte (701, 702) des zentralen Blechs (7) eingeleitete Wärmeträgergas, gemischt mit stromauf erzeugtem Wasser und/oder Kohlendioxid (CO₂) und gegebenenfalls dem überschüssigen Brennstoff in einem ersten Bereich stromauf des Ausgangs des Reaktors, unter Wasserstoff (H2), Wasserdampf (H2O), Kohlendioxid (CO2), Methan (CH4), Kohlenmonoxid (CO) oder Mischungen davon gewählt ist.

15. Betriebsverfahren nach Anspruch 12 oder 13, wobei das durch den oder die dritten Spalte oder durch den oder die Spalte (701, 702) des zentralen Blechs (7) eingeleitete Wärmeträgergas, gemischt mit der Luft und/oder mit Sauerstoff (O₂), die von stromauf in einem zweiten Bereich stromauf des Ausgangs des Reaktors stammen, unter Luft, nicht an Sauerstoff verarmter Luft, Sauerstoff oder Mischungen davon gewählt ist.

## Claims

1. Electrical and fluidic interconnector for the high-temperature electrolysis of steam (HTE) or for the high-temperature co-electrolysis with carbon dioxide CO₂, or an SOFC fuel cell, the interconnector consisting of three metal sheets (6, 7, 8), extended along two axes of symmetry (X, Y) orthogonal to one another, one of the end metal sheets being intended to come into mechanical contact with the plane of a cathode of an individual electrochemical cell and another of the metal sheets being intended to come into mechanical contact with the plane of an anode of an adjacent individual electrochemical cell, each of the two adjacent individual electrochemical cells of SOEC type being formed of a cathode, of an anode and of an electrolyte inserted between the cathode and the anode, in which device:
- one (7) of the three metal sheets (6, 7, 8), referred to as central metal sheet, comprises an embossed central part (70) comprising embossed features (700) defining channels and is pierced, at the periphery of its central part, with at least six ports (71, 72, 73, 74, 75, 76), the first to fourth ports (71 to 74) being extended each over a length corresponding to a portion of the length of the central part along one of the axes X and being distributed in pairs on either side of said axis X, whereas the fifth and sixth ports (75, 76) are extended each over a length corresponding substantially to the length of the central part along the other of the axes Y,
- one (6) of the end metal sheets, referred to as first end metal sheet, being a flat metal sheet comprising a central part (60) and the first end metal sheet being pierced, at the periphery of its central part, with at least six ports (61, 62, 63, 64, 65, 66), the first to fourth ports (61 to 64) being extended each over a length corresponding to a portion of the length of the central part of the first end metal sheet along one of the axes X and being distributed in pairs on either side of said axis X, whereas the fifth and sixth ports (65, 66) are extended each over a length corresponding substantially to the length of the central part of the first end metal sheet along the other of the axes Y, the central part (60) being pierced with at least two slits (67, 68) extended each over a length corresponding substantially to the length of the central part of the first end metal sheet along the other of the axes Y,
- the other (8) of the end metal sheets, referred to as second end metal sheet, being a flat metal sheet comprising a hollowed-out central part (80) and is pierced, at the periphery of its central part, with at least six ports (81, 82, 83, 84, 85, 86), the first to fourth ports (81 to 84) being extended each over a length corresponding to a portion of the length of the central part of the second end metal sheet along one of the axes X and being distributed in pairs on either side of said axis X, whereas the fifth and sixth ports (85, 86) are extended each over a length corresponding substantially to the length of the central part of the second end metal sheet along the other of the axes Y,
- the six ports (71, 72, 73, 74, 75, 76) of the central metal sheet (7) each comprise tongues of steel sheets (710, 720...) spaced out from one another, forming a comb, and each comprise slits (711, 721) defined between the edge of one of the ports (71 to 76) and a tongue (710, 720) or between two consecutive tongues,
- the three metal sheets (6, 7, 8) are laminated and assembled together such that:
• each of the first to sixth ports (61 to 66) of one of the three metal sheets is in fluidic communication individually respectively with one of the corresponding first to sixth ports (71 to 76; 81 to 86) of the other two metal sheets,
• the first port (71) of the central metal sheet (7) is in fluidic communication with the third port (73) of the central metal sheet (7) via the spaces (711) between tongues (710) of the first port (71), the channels defined by the embossed features (700) and the spaces between tongues (730) of the third port (73) of the central metal sheet (7),
• the second port (72) of the central metal sheet (7) is in fluidic communication with the fourth port (74) of the central metal sheet (7) via the spaces between tongues (720) of the second port (72) of the central metal sheet (7), the interior chamber (9) delimited between the embossed features (700) and the flat central part (60) of the first end metal sheet (6) and the spaces between tongues (740) of the fourth port (74) of the central metal sheet (7),
• the fifth port (65) and the sixth port (66) of the first end metal sheet (6) are in fluidic communication with one of the slits (66) and respectively the other of the slits (67) of the first end metal sheet (6) via the spaces between tongues of the fifth port (75) and respectively the sixth port (76) of the central metal sheet (7).

2. The electrical and fluidic interconnector as claimed in claim 1, in which:
- the first end metal sheet (6) additionally comprises one or more extended third slit(s) (67') over a length corresponding substantially to the length of the central part along the other of the axes Y, the third slit(s) (67') being arranged between the other two slits (67, 68) of the first end metal sheet (6),
- the three metal sheets are assembled together such that the extended third slit(s) (67') of the first end metal sheet (6) is (are) in fluidic communication with the interior chamber (9).

3. The electrical and fluidic interconnector as claimed in claim 1 or 2, in which:
- the central metal sheet (7) additionally comprises one or more extended slit(s) (701) over a length corresponding substantially to the length of the central part along the other Y of the axes, the slit(s) (701) being arranged along an embossed channel (700),
- the three metal sheets are assembled together such that the extended slit(s) (701) of the central metal sheet (7) is (are) in fluidic communication with the interior chamber (9).

4. The electrical and fluidic interconnector as claimed in one of claims 1 to 3, in which:
- the central metal sheet (7) additionally comprises one or more extended slit(s) (702) over a length corresponding substantially to the length of the central part along the other Y of the axes, the slit(s) (701) being arranged transversely to the embossed channels (700),
- the three metal sheets are assembled together such that the extended slit(s) (702) of the central metal sheet (7) is (are) in fluidic communication with the interior chamber (9).

5. An electrolysis or co-electrolysis reactor comprising a stack of individual solid oxide electrochemical cells (C1, C2, C3) each formed of a cathode (2.1, 2.2 and the like), of an anode (4.1, 4.2) and of an electrolyte (3.1, 3.2) inserted between the cathode and the anode, and a plurality of electrical and fluidic interconnectors (5) as claimed in one of the preceding claims, each arranged between two adjacent individual cells with the first end metal sheet (6) in electrical contact with the cathode (2.1) of one of the two individual cells (C1) and the embossed features (700) of the central metal sheet (7) with the anode (4.2) of the other (C2) of the two individual cells.

6. A process for the operation of an electrolysis reactor as claimed in claim 5 when dependent on claim 2, according to which:
- the first ports (61, 71, 81) are supplied with draining gas, such as air and/or oxygen (O₂), and simultaneously the second ports (62, 72, 82) are supplied with a heat-exchange gas capable of removing or introducing heat, the heat-exchange gas being chemically neutral with regard to hydrogen,
- the fifth ports (65, 75, 85) are supplied with steam and/or with hydrogen,
- the hydrogen produced by the electrolysis of the steam and, if appropriate, the gas produced by the co-electrolysis of the steam and of the heat-exchange gas introduced by the third slit(s) (67') of the first end metal sheet (6) are recovered in the sixth ports (66, 76, 86) and simultaneously the heat-exchange gas is recovered in the fourth ports (64, 74, 84) and simultaneously the oxygen produced by the electrolysis of the steam and if appropriate by the co-electrolysis is recovered in the third ports (63, 73, 83).

7. The process for the operation of an electrolysis reactor as claimed in claim 5, in which:
- the first ports (61, 71, 81) are supplied with draining gas, such as air and/or oxygen (O₂), and simultaneously the second ports (62, 72, 82) are supplied with a heat-exchange gas capable of removing or introducing heat, the heat-exchange gas being chemically neutral with regard to oxygen,
- the fifth ports (65, 75, 85) are supplied with steam and/or with hydrogen,
- the hydrogen produced by the electrolysis of the steam and, if appropriate, the gas produced by the co-electrolysis of the steam and the heat-exchange gas introduced by the extended slit(s) (701, 702) of the central metal sheet (7) are recovered in the sixth ports (66, 76, 86) and simultaneously the heat-exchange gas is recovered in the fourth ports (64, 74, 84) and simultaneously the oxygen produced by the electrolysis of the steam and if appropriate by the co-electrolysis is recovered in the third ports (63, 73, 83).

8. The process for the operation of an electrolysis reactor as claimed in claim 6 or 7, the heat-exchange gas introduced by the third slit(s), mixed with the hydrogen produced upstream or respectively with hydrogen and carbon monoxide which are produced upstream, being chosen from carbon dioxide (CO₂), hydrogen (H₂), carbon monoxide (CO), methane (CH₄), steam (H₂O) or mixtures of these.

9. The process for the operation of an electrolysis reactor as claimed in one of claims 6 to 8, according to which operating conditions in exothermic mode are defined for the electrolysis or respectively the co-electrolysis of the steam at the cathodes of the individual cells, the heat given off by the electrolysis or respectively the co-electrolysis being removed by the heat-exchange gas.

10. The process for the operation of an electrolysis reactor as claimed in one of claims 6 to 8, according to which operating conditions in endothermic mode are defined for the electrolysis or respectively the co-electrolysis of the steam at the cathodes of the individual cells, the heat absorbed by the electrolysis or respectively the co-electrolysis being contributed by the heat-exchange gas.

11. A fuel cell (SOFC) comprising a stack of individual solid oxide electrochemical cells (C11, C2, C3) each formed of an anode (2.1, 2.2, and the like), of a cathode (4.1, 4.2) and of an electrolyte (3.1, 3.2) inserted between the cathode and the anode, and a plurality of electrical and fluidic interconnectors (5) as claimed in one of claims 1 to 9, each arranged between two adjacent individual cells with the first end metal sheet (6) in electrical contact with the anode (2.1) of one of the two individual cells (C1) and the embossed features (700) of the central metal sheet (7) with the cathode (4.2) of the other (C2) of the two individual cells.

12. A process for the operation of a fuel cell (SOFC) as claimed in claim 11 when dependent on claim 2, according to which:
- the first ports (61, 71, 81) are supplied with air and/or with oxygen and, simultaneously, the second ports (62, 72, 82) are supplied with a heat-exchange gas capable of removing heat, the heat-exchange gas additionally being a fuel,
- the fifth ports (65, 75, 85) are supplied with fuel,
- the water produced and, if appropriate, the surplus fuel and, if appropriate, the heat-exchange gas introduced by the third slit(s) (67') of the end metal sheet (6) are recovered in the sixth ports (66, 76, 86) and simultaneously the heat-exchange gas is recovered in the fourth ports (64, 74, 84) and simultaneously the air and/or the oxygen is/are recovered in the third ports (63, 73, 83).

13. The process for the operation of a fuel cell (SOFC) as claimed in claim 11 when dependent on claims 3 and/or 4, according to which:
- the first ports (61, 71, 81) are supplied with air and/or with oxygen and simultaneously the second ports (62, 72, 82) are supplied with a heat-exchange gas capable of removing heat, the heat-exchange gas additionally being an oxidant,
- the fifth ports (65, 75, 85) are supplied with fuel,
- the water produced and, if appropriate, the surplus fuel and, if appropriate, the heat-exchange gas introduced by the slit(s) (701, 702) of the central metal sheet (7) are recovered in the sixth ports (66, 76, 86) and simultaneously the heat-exchange gas is recovered in the fourth ports (64, 74, 84) and simultaneously the air and/or the oxygen is/are recovered in the third ports (63, 73, 83).

14. The operating process as claimed in claim 12 or 13, the heat-exchange gas introduced by the third slit(s) or through the slit(s) (701, 702) of the central sheet (7), mixed with the water and/or the carbon dioxide (CO₂) which is (are) produced upstream and, if appropriate, the surplus fuel, being chosen from hydrogen (H2), steam (H₂O), carbon dioxide (CO₂), methane (CH₄), carbon monoxide (CO) or mixtures of these.

15. The operating process as claimed in claim 12 or 13, the heat-exchange gas introduced by the third slit(s) or through the slit(s) (701, 702) of the central sheet (7), mixed with the air and/or oxygen (O₂) originating from the upstream side of the second region, being chosen from air, air not depleted in oxygen, oxygen or mixtures of these.
